# EUROPEAN PATENT SPECIFICATION

(11) **EP 3 228 950 B1**
(45) Date of publication and mention of the grant of the patent: **12.06.2019**
(21) Application number: 17000592.0
(22) Date of filing: 07.04.2017
(51) Int. Cl.: F24H 3/04, B60H 1/22, F24H 9/18, F24H 9/20, H05B 3/00

(54) **HEATER ASSEMBLY**
HEIZANORDNUNG
ENSEMBLE DE CHAUFFAGE

(30) Priority: 07.04.2016 US 201662319297 P; 08.08.2016 KR 20160100625
(43) Date of publication of application: 11.10.2017
(73) Proprietor: LG Electronics Inc., Yeongdeungpo-Gu Seoul 07336 (KR)
(72) Inventor: Rakgyun, Kim, 06772 Seoul (KR); Jaehun, Shim, 06772 Seoul (KR); Youngsuk, Oh, 06772 Seoul (KR)
(74) Representative: Beyer, Andreas

(56) References cited:
- EP-A1- 1 872 986
- EP-A1- 2 353 898
- EP-A1- 2 440 005
- EP-A1- 2 884 197
- JP-A- 2007 265 945
- JP-A- 2012 048 897

## Description

### BACKGROUND

The present disclosure relates to a heater assembly, and more particularly to a heater assembly in which a heating module accommodated in a heat transfer pocket heats a thermal medium through the heat transfer pocket.

A vehicle may be equipped with a heater that heats air or water to heat the interior of the vehicle.

An example of such a heater may be provided in a passage for air that is supplied into the interior of the vehicle to directly heat the air supplied into the interior of the vehicle.

Another example of the heater may be connected to a heat exchanger that exchanges heat with air, through a hot water line, and may heat a thermal medium, such as water, to supply hot water to the heat exchanger.

The heater installed in the vehicle may include a heat emitting element such as a PTC (Positive Temperature Coefficient) heater or a heat emitting coil, and a connecting terminal that connects the heat emitting element and a power supply such that an electric current may flow therebetween.

### [Prior Technical Documents]

### [Patent Documents]

Korean Patent Application Publication No. 10-2005-0031024 A (published on April 1, 2005)

A heater assembly for a vehicle is, for example, disclosed in EP 2 884 197 A1 and EP 1 872 986 A1. In particular, EP 2 884 197 A1 discloses a heater assembly comprising multiple heating elements accommodated in a heat transfer pocket situated between a lower housing and a case cover. A connection circuit board is provided to connect the heating elements with a control circuit board. The connection circuit board consists of a plastic board and a metal plate, the plastic board comprising through holes, through which contact pins of the heating elements pass.

### SUMMARY

Embodiments provide a heater assembly that may reduce heat loss, may restrain a thermal medium from being introduced into a bus bar, and may secure high safety.

In accordance with an aspect of the present disclosure, there is provided a heater assembly including: a lower tank that is provided with an inlet and an outlet and has a first space; a heater case that covers the first space, has at least one heat transfer pocket that is situated in the first space, and has a second space; at least one heating module that is inserted into the heat transfer pocket such that a terminal thereof is situated in the second space; a bus bar block which is accommodated in the second space and to which the terminal is connected; and a PCB module that controls the heating module, wherein the bus bar block includes: a bus bar that contacts the terminal; and a first bus bar plate which has a terminal through-hole, through which the terminal passes, and in which the bus bar is arranged. The bus bar block further includes a second bus bar plate that is coupled to the first bus bar plate, and the bus is fixed to at least one of the first bus bar plate and the second bus bar plate.

The heater case may include: a heating body in which the heat transfer pocket and the second space are formed; and a PCB body that is integrally formed with the heating body and has a third space, in which the PCB module is accommodated.

The PCB module may include: a PCB; and a pin block that is installed on a surface of the PCB, which faces the bus bar block, and the pin block may include: a pin that is connected to the PCB; and a pin receptacle that surrounds the pin.

The pin block may be coupled to the bus bar block.

The heater assembly further include: a connecting block that is situated between the pin block and the bus bar block and is coupled to the pin block and the bus bar block.

A portion of the bus bar may protrude into the connecting block to be inserted into the connecting block, and a portion of the pin may protrude into the connecting block to be inserted into the connecting block, and the connecting block may include: a connector that is connected to the pin and the bus bar; and a connector receptacle that surrounds the connector.

The heater case may include: a heating body in which the heat transfer pocket and the second space are formed; and a PCB body that is integrally formed with the heating body and has a third space, in which the PCB module is accommodated, and at least one through hole may communicate the second space and the third space.

The connecting block may pass through the through hole.

A plurality of connecting blocks may be connected to the pin block and the bus bar block to be spaced apart from each other, and the heater case may have a partition wall that space the plurality of through holes apart from each other.

The first bus bar plate may be spaced apart from the heater case.

A first impact absorbing member that contacts the heater case may be coupled to the first bus bar plate.

The heater case may include: a base from which the heat transfer pocket protrudes towards the first space; and a circumferential wall that protrudes from the base and has the second space therein, and a first impact absorbing member that contacts the base may be coupled to the first bus bar plate.

The heater assembly may further include: a heater cover that covers the second space and hides the second bus bar plate.

A second impact absorbing member that contacts the heater cover may be coupled to the second bus bar plate.

The heater assembly may further include: a temperature sensor that is mounted in a sensor mounting hole formed in the heater case and one end of which is situated in the first space, and an electric wire guide, by which an electric wire connected to the temperature sensor is guided, may be formed in at least one of the first bus bar plate and the second bus bar plate.

The bus bar may have a terminal contact part which the terminal contacts, and the second bus bar plate may have an opening, through which the terminal and the terminal contact part are visible.

The heater assembly may further comprise a heater cover that is coupled to the heater case to cover the second space, and the second bus bar plate may cover an upper surface of the first bus bar plate.

The PCB module may include: a PCB; and a pin block that is installed in the PCB, and a connecting block that is coupled to the pin block and is arranged between the bus bar block and the pin block.

The heater case may include: a heating body in which the heat transfer pocket and the second space are formed; and a PCB body that is integrally formed with the heating body and has a third space, in which the PCB module is accommodated, and the heating body includes: a base from which the heat transfer pocket protrudes towards the first space; and a circumferential wall that protrudes from the base and has the second space therein; and a through hole, through which the connecting block passes, may be formed in the circumferential wall.

### BRIEF DESCRIPTION OF THE DRAWINGS

Fig. 1 is a view illustrating an air conditioning system of an electric vehicle in which a heater assembly is assembled according to an embodiment of the present disclosure;
Fig. 2 is a perspective view illustrating a heater assembly according to an embodiment of the present disclosure;
Fig. 3 is a plan view illustrating the interior of a heater assembly according to the embodiment of the present disclosure;
Fig. 4 is a perspective view illustrating a state in which a bus bar block of Fig. 1 is extracted to the outside;
Fig. 5 is a perspective view illustrating a state in which a heating module of Fig. 4 is extracted to the outside;
Fig. 6 is a perspective view illustrating the bus bar block, a connecting block, and a pin block together according to the embodiment of the present disclosure;
Fig. 7 is a view illustrating the bus bar of the heater assembly according to the embodiment of the present disclosure;
Fig. 8 is an exploded perspective view illustrating the heater assembly according to the embodiment of the present disclosure;
Fig. 9 is a sectional view taken along a line A-A of Fig. 2;
Fig. 10 is a sectional view taken along line B-B of Fig. 2;
Fig. 11 is an enlarged perspective view illustrating a heating module and a wedge of a heater assembly according to an embodiment of the present disclosure;
Fig. 12 is an exploded perspective view of a heating module of Fig. 11;
Fig. 13 is a sectional view taken along a line I-I of Fig. 11;
Fig. 14 is a sectional view taken along line J-J of Fig. 11;
Fig. 15 is a sectional view taken along line K-K of Fig. 11;
Fig. 16 is a sectional view in a state in which the heating module of Fig. 11 is mounted in a heat transfer pocket;
Fig. 17 is a perspective view illustrating another example of a heating module of a heater assembly according to an embodiment of the present disclosure;
Fig. 18 is a perspective view illustrating a heating block of a heater assembly according to another embodiment of the present disclosure;
Fig. 19 is an exploded perspective view of the heating block of Fig. 18;
Fig. 20 is a sectional view taken along a line M-M of Fig. 18;
Fig. 21 is a sectional view taken along line N-N of Fig. 18;
Fig. 22 is a sectional view in a state in which the heating block of Fig. 18 is mounted in a heat transfer pocket;
Fig. 23 is a transverse sectional view illustrating another example of a heating block of a heater assembly according to another embodiment of the present disclosure;
Fig. 24 is a longitudinal sectional view illustrating another example of a heating block of a heater assembly according to another embodiment of the present disclosure; and
Fig. 25 is a transverse sectional view illustrating another example of a heating block of a heater assembly according to another embodiment of the present disclosure.

### DETAILED DESCRIPTION OF THE EMBODIMENTS

Hereinafter, exemplary embodiments of the present disclosure will be described in detail with reference to the accompanying drawings.

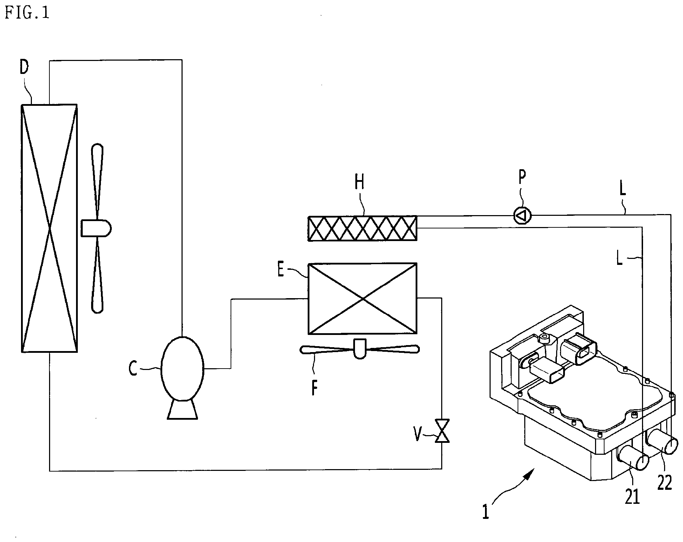

Fig. 1 is a view illustrating an air conditioning system of an electric vehicle in which a heater assembly is assembled according to an embodiment of the present disclosure.

The heater assembly 1 may be installed in an electric vehicle, and may be a heater assembly for a vehicle that heats a thermal medium, such as water, which is a hearting target (hereinafter, referred to as a thermal medium).

The heater assembly 1 may be connected to a heat exchanger H that exchanges heat with air supplied to an interior (not illustrated) of a vehicle, via a hot water line L, the thermal medium heated in the heater assembly 1 may heat the heat exchanger H while passing through the heat exchanger H, and the air supplied to the interior of the vehicle may be supplied to the interior of the vehicle after being heated by the heat exchanger H.

The hot water line L may include a water inlet line that guides the thermal medium of the heat exchanger H to the heater assembly 1, and a water outlet line that guides the thermal medium heated in the heater assembly 1 to the heat exchanger H.

A pump P that pumps the thermal medium such that the thermal medium circulates through the heat exchanger H and the heater assembly 1 may be installed in the hot water line L.

The electric vehicle may include a compressor C that compresses a refrigerant, a condenser D that condenses the refrigerant compressed by the compressor C, an expansion mechanism V that expands the refrigerant condensed by the condenser D, and an evaporator E that evaporates the refrigerant expanded by the expansion mechanism V.

The evaporator E may constitute a heating, ventilation, and air conditioning (HVAC) system of the electric vehicle together with the heat exchanger H.

The HVAC system of the electric vehicle may further include a fan F that blows air towards the evaporator E and the heat exchanger H.

When the fan F is driven, the air in the interior of the vehicle or exterior air may be discharged into the interior of the vehicle after passing through the evaporator E and the heat exchanger H.

During an operation of cooling the interior of the vehicle, the compressor C and the fan F may be driven, and the air may be discharged into the interior of the vehicle after being cooled by the evaporator E.

During an operation of heating the interior of the vehicle, the heater assembly 1, the fan F, and the pump P may be driven, the thermal medium may flow to the heat exchanger H after being heated by the heater assembly 1 to heat the heat exchanger H, and the air may be discharged into the interior of the vehicle after being heated by the heat exchanger H.

Meanwhile, the heater assembly 1 may be equipped with a hot line connector to which the hot water line is connected, and a plurality of hot line connectors may be formed in the heater assembly 1.

The hot water line connector may include an inlet 21 through which the thermal medium in the water inlet line enters the interior of the heater assembly 1, and an outlet 22 through which the hot water heated in the heater assembly 1 passes to be discharged to the water outlet line.

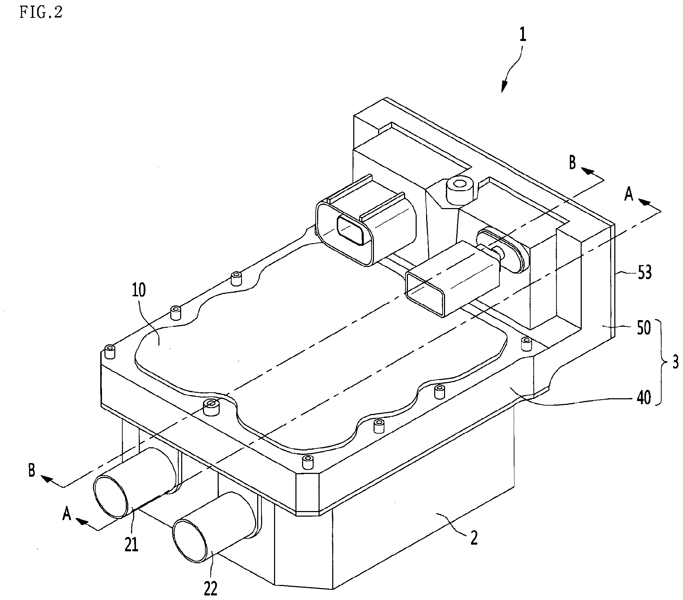

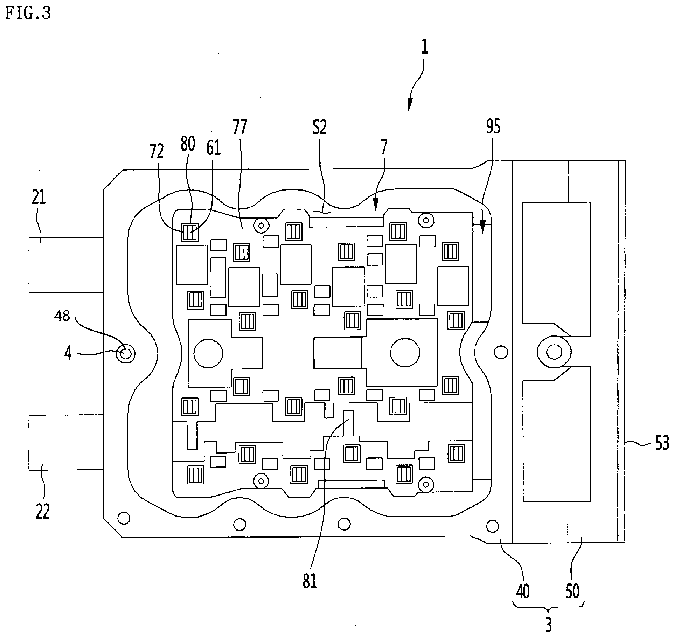

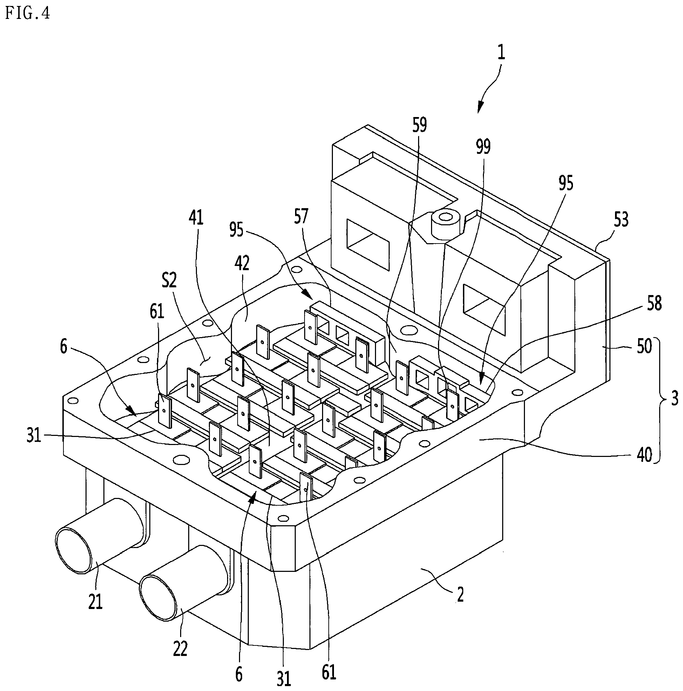

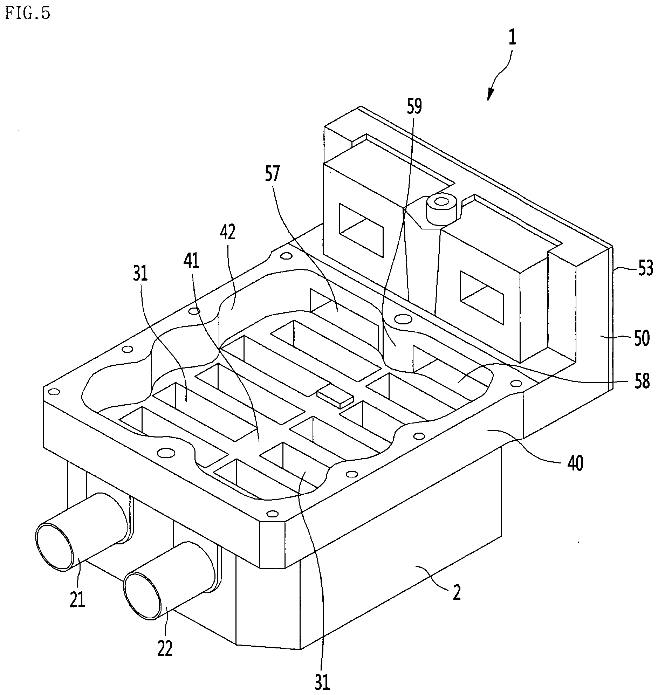

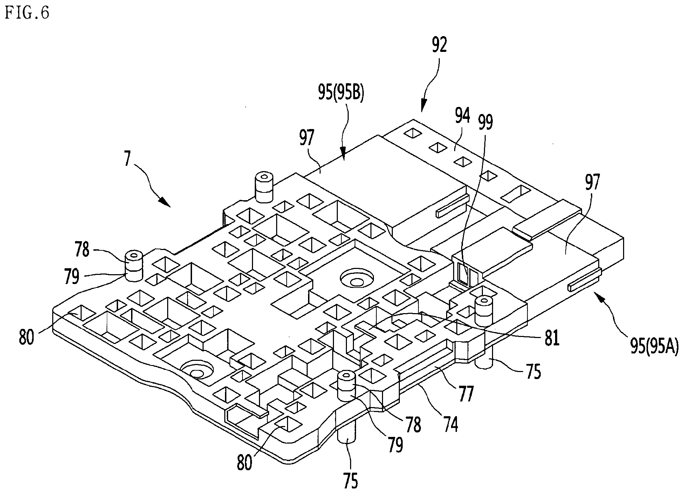

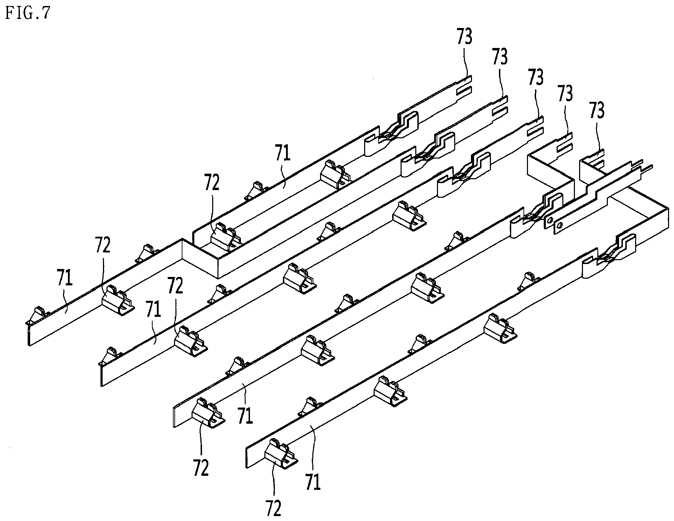

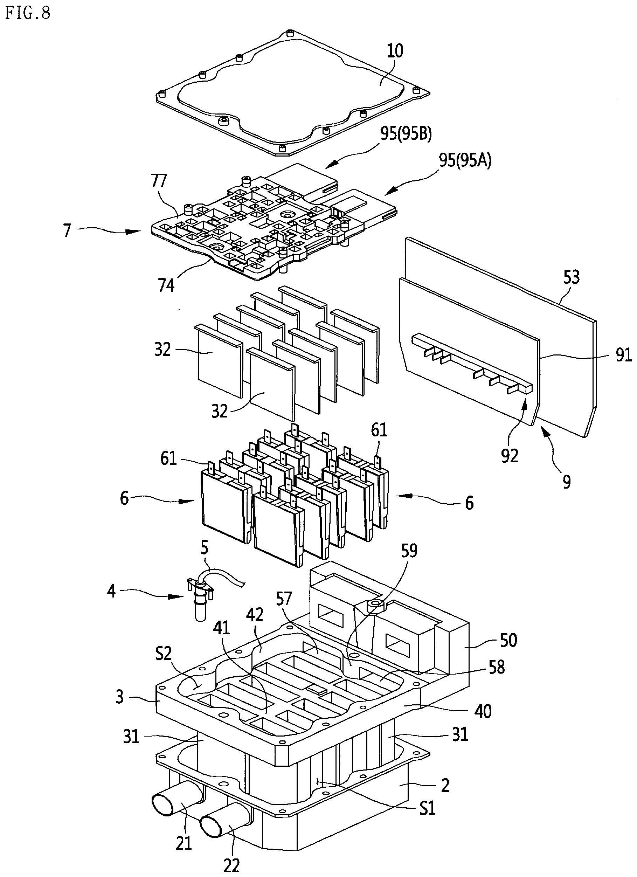

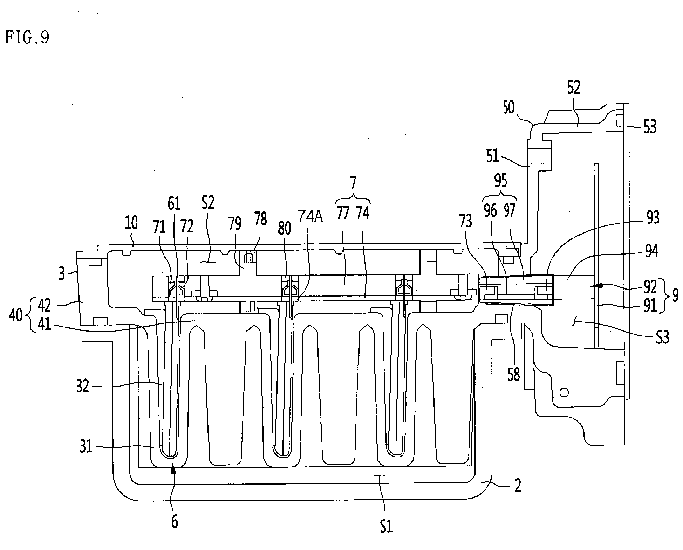

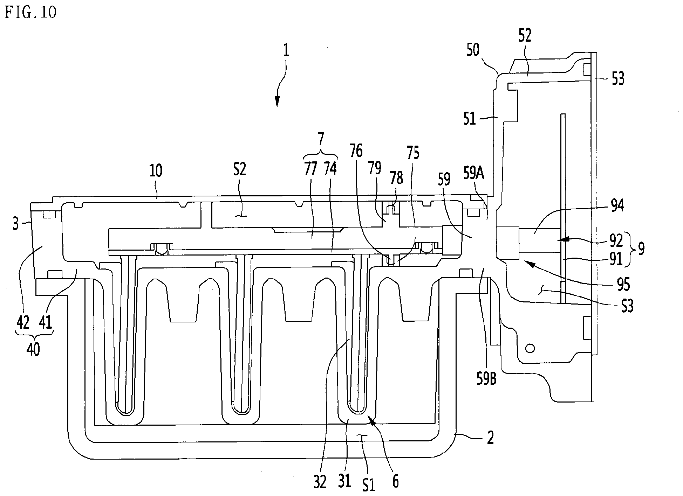

Fig. 2 is a perspective view illustrating a heater assembly according to an embodiment of the present disclosure. Fig. 3 is a plan view illustrating the interior of a heater assembly according to the embodiment of the present disclosure. Fig. 4 is a perspective view illustrating a state in which a bus bar block of Fig. 3 is extracted to the outside. Fig. 5 is a perspective view illustrating a state in which a heating module of Fig. 4 is extracted to the outside. Fig. 6 is a perspective view illustrating the bus bar block, a connecting block, and a pin block together according to the embodiment of the present disclosure. Fig. 7 is a view illustrating the bus bar of the heater assembly according to the embodiment of the present disclosure. Fig. 8 is an exploded perspective view illustrating the heater assembly according to the embodiment of the present disclosure. Fig. 9 is a sectional view taken along a line A-A of Fig. 2. Fig. 10 is a sectional view taken along line B-B of Fig. 2.

The heater assembly 1 includes a lower tank 2, a heater case 3, a heating module 6, a bus bar block 7, and a Printed Circuit Board (PCB) module 9.

The lower tank 2 may be equipped with an inlet 21 and an outlet 22, and may have a first space S1. One of an upper surface, a front surface, a rear surface, a left surface, and a right surface of the lower tank 2 may be opened, and a first space S1 may be formed in the interior of the lower tank 2.

The inlet 21 and the outlet 22 may be formed on a circumferential wall of the lower tank 2.

The inlet 21 may be an opening through which the thermal medium that is a heating target of the heater assembly 1 passes to be introduced into the first space S1.

The outlet 22 may be an opening through which the thermal medium heated in the first space S1 passes to be discharged.

At least one of the inlet 21 and the outlet 22 may be an opening that is formed on one side wall of the lower tank 2 such that the thermal medium passes therethrough.

At least one of the inlet 21 and the outlet 22 may be a hollow cylinder that protrudes from one side surface of the lower tank 2 in any one of an outward direction and an inward direction and has a passage, through which the thermal medium passes, therein.

The heater case 3 may be arranged to cover the first space S1, and may be coupled to the lower tank 2 to prevent the thermal medium in the first space S1 from being discharged through the opened surface of the lower tank 2. The heater case 3 may be larger than the lower tank 2. The heater case 3 may be a lower tank cover.

When the upper surface of the lower tank 2 is opened, the heater case 3 may contact an upper end of the lower cover 2 to cover the opened upper surface of the lower tank 2. As another example, when one of the front surface, the rear surface, the left surface, and the right surface of the lower tank 2 is opened, the heater case 3 may contact a circumferential wall of the lower cover 2 to cover the opened surface of the lower tank 2.

A second space S2 that is partitioned from the first space S1 may be formed in the heater case 3. The second space S2 may be a space in which terminals 61 of heating modules 6 and a bus bar block 7 are accommodated.

The heater case 3 may include a heat transfer pocket 31 situated in the first space S1, and the heat of the heating modules 6 may be transferred to the first space S1 through the heat transfer pocket 31. The heat transfer pocket 31 may be formed in the heater case 3 to protrude into the first space S1.

The heat transfer pocket 31 may be a heating module accommodating part in which the heating modules 6 are inserted and accommodated, and may be a heat transfer part that receives the heat of the heating modules 6 and transfers the heat to the first space S1.

The heat transfer pocket 31 may have a 3D shape, one surface of which is opened, and the heating modules 6 may be inserted into the heat transfer pocket 31 through the opened surface of the heat transfer pocket 31. The heat transfer pocket 31 may have a shape, the surfaces of which, except for the opening surface, are blocked for insertion of the heating modules 6.

An upper surface of the heat transfer pocket 31 may be opened, and the heating modules 6 may be inserted into the heat transfer pocket 31 through the opened upper surface of the heat transfer pocket 31 at an upper location of the heat transfer pocket 31.

An opened surface of the heat transfer pocket 31 may be opened, and a lower surface and a circumferential surface of the heat transfer pocket 31 may be blocked. The circumferential surface of the heat transfer pocket 31 may include a front surface, a rear surface, a left surface, and a right surface thereof, and in this case, all the lower surface, the front surface, the rear surface, the left surface, and the right surface of the heat transfer pocket 31 may be blocked.

The heat transfer pocket 31 may protrude from the heat case 3 to a lower side. A lower end of the heat transfer pocket 31 may contact an inner bottom surface of the lower tank 2 or may be spaced apart from the inner bottom surface of the lower tank 2.

The heat transfer pocket 31 may vertically extend in the first space S1. The thermal medium in the first space S1 may contact an outer surface of the heat transfer pocket 31, and the heat transfer pocket 31 may be a heat transfer part that transfers the heat of the heating modules 6 to the thermal medium in the first space S1.

A plurality of heat transfer pockets 31 may be formed in the heater case 3. The plurality of heat transfer pockets 31 may be spaced apart from the heater case 3. The plurality of heat transfer pockets 31 may be arranged in parallel to each other in the first space S1.

Apertures, through which the thermal medium may pass, may be formed between the plurality of heat transfer pockets 31. The thermal medium introduced into the first space S1 may flow while passing through the apertures between the plurality of heat transfer pockets 31.

The plurality of heat transfer pockets 31 may be arranged in zigzags in the first space S1. The thermal medium may be primarily heated by any one of the plurality of heat transfer pockets 31, and may be secondarily heated by another one of the plurality of heat transfer pockets 31. The thermal medium may be heated in multi-stages by at least two heat transfer pockets 31.

The heater case 3 may include a heating body 40 in which the heat transfer pockets 31 and the second space S2 are formed.

Further, the heater case 3 may include a PCB body 50 in which a third space S3, in which a PCB module 9 is accommodated, is formed. The PCB body 50 may be formed integrally with the heating body 40.

The heater case 3 may include a base 41, and a circumferential wall 42 that protrudes from the base 41 and has the second space S2 therein.

The heat transfer pockets 31 may protrude from the base 41 to a lower side. The heat transfer pockets 31 may protrude from the base 41 towards the first space S1.

The second space S2 may be defined by the base 41 and the circumferential wall 42. The base 41 may define the bottom surface of the second space S2, and the circumferential wall 42 may define a circumferential surface of the second space S2.

The heating body 40 may include all of the heat transfer pockets 31, the base 41, and the circumferential wall 42. The heat transfer pockets 31 and the circumferential wall 42 may protrude from the base 41 in opposite directions. The heat transfer pockets 31 may protrude from the base 41 to the lower side, and the circumferential wall 42 may protrude from the base 41 to the upper side.

The heater assembly 1 may further include a temperature sensor 4 that detects a temperature of the first space S1.

The temperature sensor 4 is mounted in a sensor mounting hole 48 formed in the heater case 3, and one end of the temperature sensor 4 may be situated in the first space S1. A portion of the temperature sensor 4 may be inserted into and mounted in the sensor mounting hole 48 such that a lower end of the temperature sensor 4 is situated in the first space S1.

The sensor mounting hole 48 may be formed in the heating body 40. The sensor mounting hole 48 may be formed in the base 41 of the heating body 40. The sensor mounting hole 48 may be formed in a portion of the base 41 except the heat transfer pockets 31.

An electric wire 5 may be connected to the temperature sensor 4, and the electric wire 5 may be connected to a sensor connector 99 installed in the connecting block 95 or the PCB module 9, which will be described below.

The electric wire 5 and the sensor connector 99 may be connected to each other or spaced from each other by a male/female connector structure. A female connector may be provided in any one of the electric wire 5 and the sensor connector 99, and a male connector, at least a portion of which is inserted into and connected to the female connector, may be provided in the other of the electric wire 5 and the sensor connector 99.

The temperature sensor 4 may transmit a signal based on a measurement result to the PCB module 9 through the electric wire 5 and the sensor connector 99, and the PCB module 9 may detect a current temperature of the heater assembly 1 according to the signal transmitted by the temperature sensor 4.

The sensor mounting hole 48 may be formed on a side that is opposite to the PCB body 50, and the electric wire 5 may be connected to the sensor connector 99 while at least a portion of the electric wire 5 is situated in the second space S2. The structure that supports the electric wire 5 will be described below.

The PCB body 50 may have a shape, one surface of which is opened. The PCB body 50 may include a vertical plate 51 that is perpendicular to the base 41.

The PCB body 50 may further include a circumferential wall 52 that protrudes from the vertical plate 51 and has a third space S3 therein.

The circumferential wall 52 may include an upper plate and a lower plate that are vertically spaced apart from each other. The circumferential wall 52 may further include a second vertical plate that connects one side of the upper plate and one side of the lower plate and extends vertically, and a third vertical plate that connects an opposite side of the upper plate and an opposite side of the lower plate and extends vertically.

The third space S3 may be defined by the vertical plate 51, an upper plate, a second vertical plate, a lower plate, and a third vertical plate of the PCB body 50.

The heater assembly 1 may further include a PCB cover 53 that covers the third space S3. The PCB module 9 may be situated between the PCB body 50 and the PCB cover 53. The PCB module 9 may be fixed to at least one of the PCB body 50 and the PCB cover 53. The PCB module 9 may vertically extend in the third space S3.

The heater case 3 may be formed such that the second space S2 and the third space S3 are not interrupted from each other but communicated with each other.

The heater case 3 may have at least one through hole 57 and 58 that communicates the second space S2 and the third space S3. The at least one through hole 57 and 58 may be formed for electrical connector of the heating module 6 and the PCB module 9.

The at least one through hole 57 and 58 may be formed to be horizontally opened, and the second space S2 in which the bus bar block 7 is accommodated and the third space S3 in which the PCB module 9 is accommodated may be communicated with each other by the at least one through hole 57 and 58.

One of the circumferential walls 42 of the heating body 40 may be situated between the second space S2 and the third space S3 of the heater case 3. The at least one through hole 57 and 58 may be formed at a portion of the circumferential wall 42, which is situated between the second space S2 and the third space S3, to be opened horizontally.

The heater assembly 1 may further include a heater cover 10 that covers the second space S2. The heater cover 10 may hide the bus bar block 7, and may block the second space S2 and the bus bar block 7 such that the second space S2 and the bus bar block 7 are not visible from the outside.

The heating body 40 may have a shape, an upper surface of which is opened, and in this case, the heater cover 10 may be arranged on an upper side of the heating body 40 to cover the second space S2 situated below the heater cover 10. The heater cover 10 may be a top cover of the heater assembly 1.

When the heater assembly 1 is serviced, the heater cover 10 may be separated from the heater case 3, and the, the second space S2 and the bus bar block 7 may be viewed through the opened upper surface of the heater case 3.

At least one heating module 6 may be arranged in the heater case 3. A plurality of heating modules 6 may be mounted on the heater case 3, and the plurality of heating modules 6 may heat the heater case 3 together.

The heating modules 6, except for the upper surfaces thereof, may be surrounded by the heat transfer pockets 31 when being inserted into the heat transfer pockets 31, and portions of the heating modules 6, which are inserted into the heat transfer pockets 31, may directly contact the heat transfer pockets 31 or may contact wedges 32 in contact with the heat transfer pockets 31.

The heating modules 6 may be inserted into the heat transfer pockets 31, the wedges 32 may be inserted into the apertures between the heating modules 6 and the heat transfer pockets 31, and the wedges 32 may fix the heating modules 6 in the interiors of the heat transfer pockets 31.

The wedges 32 may be arranged between the heating modules 6 and the heat transfer pockets 31 to function as press members that adheres the heating modules 6 to the heat transfer pockets 31.

Further, the wedges 32 may function as heat transfer members that transfer the heat of the heating modules 6 to the heat transfer pockets 31. It is preferable that the wedges 32 be formed of a material having a high heat transfer performance.

The heating modules 6 may be electrically connected to the PCB module 9 through the bus bar block 7, and may be electric heating modules that are heated if an electric voltage is applied thereto. Each of the heating modules 6 may include a heating element that is heated if a current flows therethrough. The heating elements of the heating modules 6 may be PTC elements.

Each of the heating modules 6 may include a pair of terminal plates, which the corresponding heating element contact, and the heating element may be arranged between the pair of terminal plates to contact the pair of terminal plates. A terminal 61 that is electrically connected to the bus bar 71 may be formed in each of the pair of terminal plates.

Each of the heating modules 6 may include two protruding terminals. Any one of the two terminals may be connected to a positive electrode bus bar of the bus bar block 7 to contact the positive electrode bus bar, and the other of the two terminals may be connected to a negative electrode bus bar of the bus bar block 7 to contact the negative electrode bus bar.

The heating modules 6 may be inserted into and mounted on the heat transfer pockets 31. When the heating modules 6 is inserted into and mounted on the heat transfer pockets 31, the terminals 61 may be situated in the second space S2 and the portions of the heating modules 6, except for the terminals 61, may be situated in the interiors of the heat transfer pockets 31.

When the plurality of heating modules 6 are mounted on the heater case 3, the plurality of terminals 61 may be situated in the second space S2, and the bus bar block 7 may be accommodated in the second space S2 to be connected to the plurality of terminals 61 situated in the second space S2.

When the top cover 10 does not cover the second space S2, the bus bar block 7 may be inserted into the second space S2, and may be connected to the terminals 61 of the heating modules 6 in the second space S2.

The plurality of heating modules 6 connected to the bus bar block 7 may be connected to each other through the bus bar block 7. The plurality of heating modules 6 may extend vertically, the bus bar block 7 may be arranged in the second space S2 to extend horizontally, and the plurality of heating modules 6 and the bus bar block 7 may be supported by each other. The bus bar block 7 may be firmly supported on the plurality of heating modules 6 mounted on the heater case 3.

The bus bar block 7 may be accommodated in the second space S2, and may be connected to the terminals 61 of the heating modules 6.

The bus bar block 7 may include bus bars 71, and at least one bus bar plate 74 and 77 in which the bus bars 71 are arranged.

The bus bars 71 may contact the terminals 61, and may be electrically connected to the heating modules 6 through the terminals 61.

A terminal contact part 72, which the corresponding terminal 61 contacts, may be formed in each of the bus bars 71.

A plurality of bus bars 71 may be provided in the bus bar block 7, and in this case, the plurality of bus bars 71 may contact the terminals 61 of the plurality of heating modules 6. For example, the terminals of two to ten heating modules 6 may contact one bus bar 71.

The plurality of bus bars 71 may be spaced apart from each other. The plurality of bus bars 71 may be horizontally spaced apart from each other. The plurality of bus bars 71 may extend horizontally, and may be spaced apart from each other in a direction that is perpendicular to the lengthwise directions thereof.

Some of the plurality of bus bars 71 may be positive electrode bus bars, and the remaining ones of the plurality of bus bars 71 may be negative electrode bus bars.

The bus bar plate 74 and 77 may include a first bus bar plate 74 in which the corresponding bus bar 71 is arranged. At least one terminal through-hole 74A, through which the corresponding terminal 61 passes, may be formed in the first bus bar plate 74.

The bus bar plate 74 and 77 may further include a second bus bar plate 77 that is coupled to the first bus bar plate 74. The second bus bar plate 77 may constitute the bus bar block 7 together with the first bus bar plate 74 and the plurality of bus bars 71.

The bus bar 71 may be fixed to at least one of the first bus bar plate 74 and the second bus bar plate 77. A bus bar fixing part that fixes the bus bars may be formed in at least one of the first bus bar plate 74 and the second bus bar plate 77. The bus bar fixing part may include a pair of insertion ribs or insertion recesses that are formed in at least one of the first bus bar plate 74 and the second bus bar plate 77 such that the first bus bar 71 is fixedly fitted therewith.

The bus bars 71 may arranged on an upper surface of the first bus bar plate 74.

The bus bars 71 may extend in a direction that is parallel to a direction in which the plurality of heating modules 6 is spaced apart from each other. Each of the bus bars 71 may have a bar shape, and a plurality of terminals 61 may contact the bus bars 71. That is, the plurality of heating modules 6 may be connected to the bus bars 71 to be connected to each other.

A bus bar fixing part by which the bus bars 71 are supported upright may be formed in the first bus bar plate 74. Lower ends of the bus bars 71 may be inserted into the bus bar fixing part of the first bus bar plate 74.

The bus bar fixing part formed in the first bus bar plate 74 may correspond to bus bar insertion recesses that are formed on an upper surface of the first bus bar plate 74, and in this case, lower ends of the bus bars 71 may be inserted into the bus bar insertion recesses and the bus bars 71 may be fixed to the first bar plate 74.

The bus bar fixing part formed in the first bus bar plate 74 may correspond to a pair of insertion ribs that protrude upwards from an upper surface of the first bus bar plate 74, and in this case, lower ends of the bus bars 71 may be inserted between the pair of insertion ribs and the bus bars 71 may be fixed to the first bar plate 74.

The first bus bar plate 74 may protect the bus bars 71 between the base 41 of the heater case 3 and the bus bars 71. A bottom surface of the first bus bar plate 74 may face an upper surface of the base 41 of the heater case 3.

The first bus bar plate 74 may vertically face the base 41 of the heater case 3, and may prevent heat of the lower side of the first bar plate 74 from being rapidly transferred to the upper side of the first bus bar plate 74. That is, a temperature of the lower side of the first bus bar plate 74 may be maintained to be maximally high by the first bus bar plate 74.

The first bus bar plate 74 may prevent heat of the first bus bar plate 74 from being rapidly transferred from the lower side of the bus bars 71 to the upper side of the bus bars 71, and may reduce rising of the temperatures of the bus bars 71.

Terminal through-holes 74A, through which the terminals 61 pass, may be formed in the first bus bar plate 74, and the terminals 61 may pass through the terminal through-holes 74A from the heating modules 6 situated below the first bus bar plate 74 to contact the bus bars 71.

The first bus bar plate 74 may be spaced apart from the heater case 3. The first bus bar plate 74 may be arranged between the heater case 3 and the heater cover 10 to be spaced apart from the heater case 3 and the heater cover 10.

First impact absorbing members 75 that contact the heater case 3 may be coupled to the first bus bar plate 74.

The first impact absorbing members 75 may be coupled to the first bus bar plate 74 to contact the base 41 of the heater case 3. First impact absorbing member mounting parts 76, on which the first impact absorbing members 75 are mounted, may be formed in the first bus bar plate 74.

The first impact absorbing members 75 may be formed of a resilient material such as rubber or silicon. When the bus bar block 7 is mounted, the first impact absorbing members 75 may be pressed between the base 41 of the heater case 3 and the first bus bar plate 74 to support the bus bar block 7 and alleviate an impact due to vibration or the like. The first impact absorbing members 75 may be bus bar block supports or spacers that support the bus bar block 7 such that the bus bar block 7 is spaced apart from the base 41 of the heater case 3.

The second bus bar plate 77 may be arranged on the first bus bar plate 74, and may cover the upper surface of the first bus bar plate 74.

A bus bar fixing part by which the bus bars 71 is supported upright may be formed in the second bus bar plate 77. Upper ends of the bus bars 71 may be inserted into the bus bar fixing part of the second bus bar plate 77.

The bus bar fixing part formed in the second bus bar plate 77 may correspond to bus bar insertion recesses that are formed on a bottom surface of an upper plate of the second bus bar plate 77, and in this case, upper ends of the bus bars 71 may be inserted into the bus bar insertion recesses and the bus bars 71 may be fixed to the second bus bar plate 77.

The bus bar fixing part formed in the second bus bar plate 77 may correspond to a pair of insertion ribs that protrude downward on a bottom surface of the second bus bar plate 77, and in this case, lower ends of the bus bars 71 may be inserted between the pair of insertion ribs and the bus bars 71 may be fixed to the first bar plate 74.

When being coupled to the first bus bar plate 74, the second bus bar plate 77 may protect the bus bars 71 from the upper side of the bus bars 71, and the bus bars 71 may be arranged between the first bus bar plate 74 and the second bus bar plate 77.

The second bus bar plate 77 may be arranged between the heater case 3 and the heater cover 10 to be spaced apart from the heater case 3 and the heater cover 10.

Second impact absorbing members 78 that contact the heater cover 10 may be coupled to the second bus bar plate 77.

Second impact absorbing member mounting parts 79, on which the second impact absorbing members 78 are mounted, may be formed in the second bus bar plate 77. The second impact absorbing members 78 may be formed of a resilient material such as rubber or silicon.

When the top cover 10 is mounted after the bus bar block 7 is mounted, the second impact absorbing members 78 may be pressed between the top cover 10 and the second bus bar plate 77 to reduce shaking of the bus bar block 7 and to alleviate an impact due to vibration or the like.

The second impact absorbing members 78 may be spacers that press the bus bar block 7 such that the bus bar block 7 is spaced apart from the top cover 10.

An opening 80, through which the terminals 61 and the terminal contact parts 72 may be identified, may be formed in the second bus bar plate 77. The opening 80 may be formed on the upper side of the terminals 61 and the terminal contact parts 72 to be opened.

When the bus bar block 7 is inserted into the second space S2, the terminals of the plurality of heating modules 6 may pass though the terminal through-holes 74A of the first bus bar plate 74.

The terminals 61 of the plurality of heating modules 6 may contact the terminal contact parts 72 of the bus bars 71, and the plurality of the heating modules 6 may be connected to the bus bars 71 through the terminals 61, respectively.

Meanwhile, an operator who assembles the heater assembly 1 may identify the contact states of the terminals 61 and the terminal contact parts 72 through the opening 80 of the second bus bar plate 77. Then, the bus bar block 7 may be reliably assembled with the plurality of heating modules 6.

An electric wire guide 81, by which an electric wire 5 connected to the temperature sensor 4 is guided, may be formed in at least one of the first bus bar plate 74 and the second bus bar plate 77. It is preferable that the electric wire guide 81 be situated in the upper one of the first bus bar plate 74 and the second bus bar plate 77, and it is preferable that the electric wire guide 81 is formed in the second bus bar plate 77.

The electric wire guide 81 may include an electric wire accommodating hole which is formed in the second bus bar plate 77 and in which a portion of the electric wire is accommodated, and a protrusion that protrudes from the second bus bar plate 77 into the electric wire accommodating hole such that the electric wire contacts the protrusion. The size of the protrusion may be smaller than the size of the electric wire accommodating hole. One end of the protrusion may protrude from the second bus bar plate 77, and an opposite end of the protrusion may be a free end. The electric wire 5 may be bent once such that a portion of the electric wire 5 is situated in the electric wire accommodating hole. If necessary, the electric wire 5 may have a shape that is wound on the protrusion at least once.

The temperature sensor 4 may be mounted after the bus bar block 7 is completely mounted, and the electric wire 5 connected to the temperature sensor 4 may be wired to the electric wire guide 81 of the bus bar block 7 accommodated in the second space S2 such that the electric wire 5 is fixed to the electric wire guide 81 to contact the electric wire guide 81.

The PCB module 9 may control the heating modules 6. The PCB module 9 may be electrically connected to the heating modules 6 through the bus bar block 7, and may apply an electric voltage to the heating modules 6 through the bus bar block 7.

The PCB module 9 may include a PCB 91, and a pin block 92 that is installed on a surface of the PCB 91, which faces the bus bar block 7.

The PCB 91 may vertically extend in the third space S3.

One surface of the PCB 91 may face an inner surface of the PCB body 50 and the bus bar block 7, and an opposite surface of the PCB 91 may face the PCB cover 53.

The pin block 92 may be installed on one surface of the PCB 91 to protrude towards the bus bar block 7.

The pin block 92 may include a pin 93 that is connected to the PCB 91, and a pin receptacle 94 that surrounds the pin 93.

The pin block 92 may be coupled to the bus bar block 7 while being mounted on the PCB 91. The bus bar block 7 may be coupled to the pin block 92 to be separable from the pin block 92, and may be electrically connected to the PCB 91 through the pin block 92.

The pin block 92 may be coupled to the bus bar block 7 through the connecting block 95, and in this case, the connecting block 95 may be situated between the pin block 92 and the bus bar block 7 and may be coupled to the pin block 92 and the bus bar block 7. Further, the bus bar block 7 may be electrically connected to the PCB 91 through the connecting block 95 and the pin block 92.

A portion 73 of the bus bar 71 may protrude into the connecting block 95 to be inserted into the connecting block 95.

A portion of the pin 93 may protrude into the connecting block 95 to be inserted into the connecting block 95.

The connecting block 95 may include a connector 96 that is connected to the pin 93 and the bus bar 71, and a connector receptacle 97 that surrounds the connector 96.

The connector 96 may be fitted with a portion 73 of the bus bar 71 and a portion of the pin 93 through a male/female coupling structure.

A pair of bus bar insertion parts, between which a portion of the bus bar 71 is inserted, may be formed on one side of the connector 96, which faces the second space S2. The pair of bus bar insertion parts may be face each other in a direction that is perpendicular to a direction in which a portion 73 of the bus bar 71 is inserted. The pair of bus bar insertion parts may be resiliently deformed in opposite directions if a portion 73 of the bus bar 71 is inserted between the pair of bus bar insertion parts, and may remain in contact with the portion 73 of the bus bar 71.

A pair of pin insertion parts, between which a portion of the pin 93 is inserted, may be formed on an opposite side of the connector 96, which faces the third space S3. The pair of pin insertion parts may be face each other in a direction that is perpendicular to a direction in which a portion of the pin 93 is inserted. The pair of pin insertion parts may be resiliently deformed in opposite directions if a portion of the pin 93 is inserted between the pair of pin insertion parts, and may maintain in contact with the pin 93.

In the connector 96, the pair of bus bar insertion parts and the pair of pin insertion parts may be spaced apart from each other in a lengthwise direction thereof, and the pair of bus bar insertion parts and the pair of pin insertion parts may be connected to each other by a connecting part.

The connector receptacle 97 may be a connector housing in which the connector 96 is accommodated. A horizontally opened through hole may be formed in the connector receptacle 97, and a portion 73 of the bus bar 71 and a portion of the pin 93 may be inserted through the through hole of the connector receptacle 97 to contact the connector 96.

A portion 73 of the bus bar 71 and a portion of the pin 93 may be inserted into the connector receptacle 97 from opposite sides of the connector receptacle 97.

The connecting block 95 may pass through through holes 57 and 58 between the second space S2 and the third space S3.

Meanwhile, one or a plurality of through holes may be formed in the heater case 3, but it is preferable that a plurality of through holes 57 and 58 be provided in the heater case 3.

When a plurality of through holes 57 and 58 are not formed in the heater case 3 but one horizontally extending through hole is formed in the heater case 3, a portion of the heater case 3, which is situated above the one through hole, may be bent or deformed downwards.

The heater case 3 may have partition wall 59 that is situated between the plurality of through holes 57 and 58 to partition the plurality of through holes 57 and 58.

The plurality of through holes 57 and 58 may be formed in the heater case 3 to be spaced apart from each other while the partition wall 59 is interposed therebetween. Here, the partition wall 59 is a part that connect a portion 59A situated on the upper side thereof and a portion 59B situated on the lower side thereof, and the portion 59A situated on the upper side of the partition wall 59 may be supported by the partition wall 59 and is neither bent nor deformed to the lower side.

A plurality of connecting blocks 95 may be connected to the pin block 92 and the bus bar block 7 to be spaced apart from each other. Any one 95A of the plurality of connecting blocks 95 and another one 95B of the plurality of connecting blocks 95 may be spaced apart from each other while a partition wall 59 is interposed therebetween.

The connecting block 95 may be inserted through the through holes 57 and 58 in the third space S3, and may be slid to be connected to the bus bar block 7 accommodated in the second space S2.

After the bus bar block 7 is mounted, at least a portion of the connecting block 95 may be situated in the through holes 57 and 58.

If the connecting block 95 is slid to be closer to the bus bar block 7, some 73 of the bus bars 71 of the bus bar block 7 situated on the upper side of the plurality of heating blocks 6 may be inserted into the connector receptacle 97 of the connecting block 95 and may be connected to the connector 96.

After the connecting block 95 is connected to the bus bar block 7, the PCB module 9 may be inserted into and accommodated in the PCB body 50.

The PCB module 9 may be inserted into the PCB body 50 such a portion of the pin 93 of the pin block 92 is inserted into the connector receptacle 97, and a portion of the pin 93 inserted into the connector receptacle 97 may be connected to the connector 96.

If the connecting block 95 is connected to the bus bar module 7 and the pin block 92 of the PCB module 9 is connected to the connecting block 95 as described above, the bus bar block 7 may be connected to and supported by the plurality of heating modules 6 and the connecting block 95 and the pin block 92 may be connected to and supported by the connecting block 95.

Further, the terminals 61 of the plurality of heating modules 6, the bus bar 71 of the bus bar block 7, the connector 96 of the connecting block 95, and the pin 93 of the pin block 92 may be electrically connected to each other.

The PCB 91 of the PCB module 9 may control the plurality of heating modules 6 through the pin 93, the connector 96, the bus bar 71, and the terminals 61.

Meanwhile, it is apparent that a separate connecting block 95 is not further provided but the pin block 92 extend long such that a portion of the pin block 92 extends into the second space S2 via the through holes 57 and 58 to be directly connected to the bus bar block 7.

In this case, a pair of bus bar insertion parts, into which an outwardly protruding portion of the bus bar block 7 is inserted, may be formed in the pin 93 of the pin block 92.

When the connecting block 95 is not provided, the PCB module 9 may be inserted into and mounted in the third space S3 while the bus bar block 7 is mounted, and then a portion of the pin block 92 may be inserted into the through holes 57 and 58 and may be connected to the bus bar block 7 situated in the second space S2.

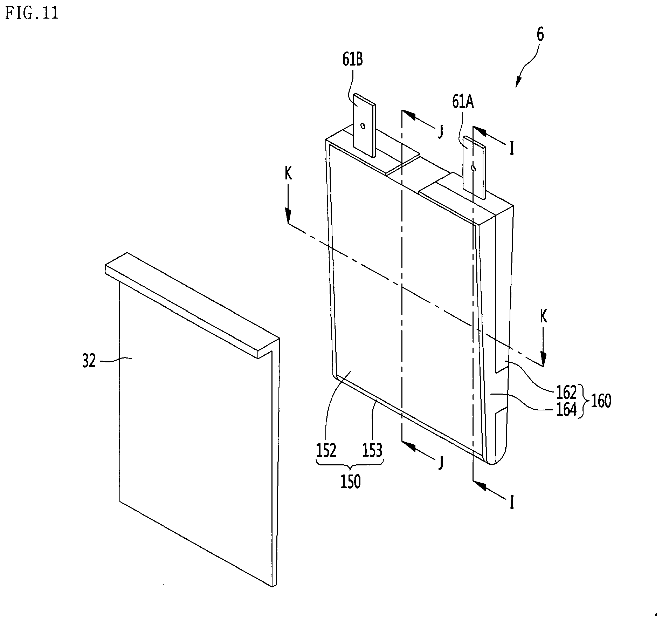

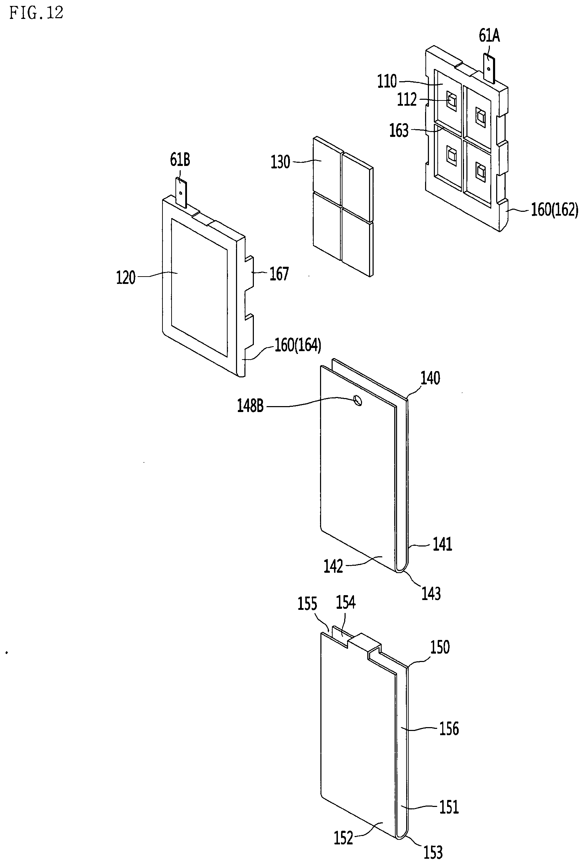

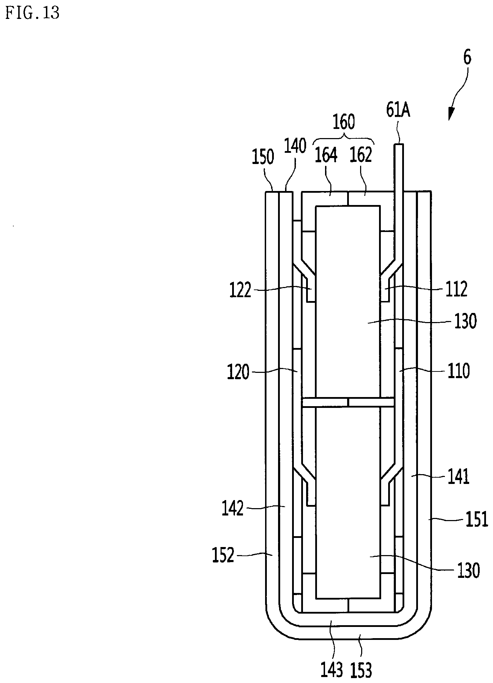

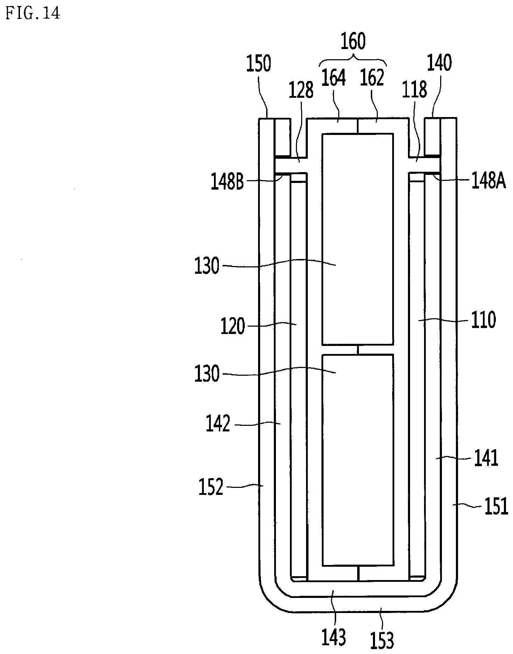

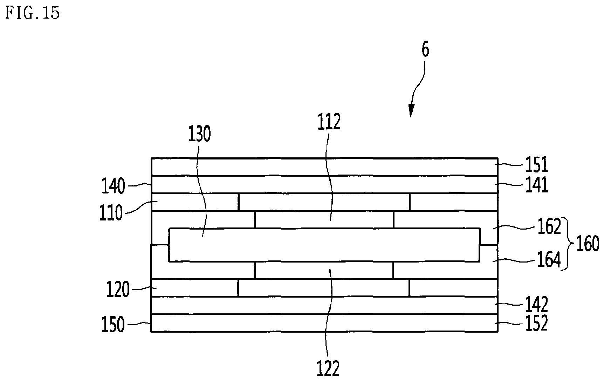

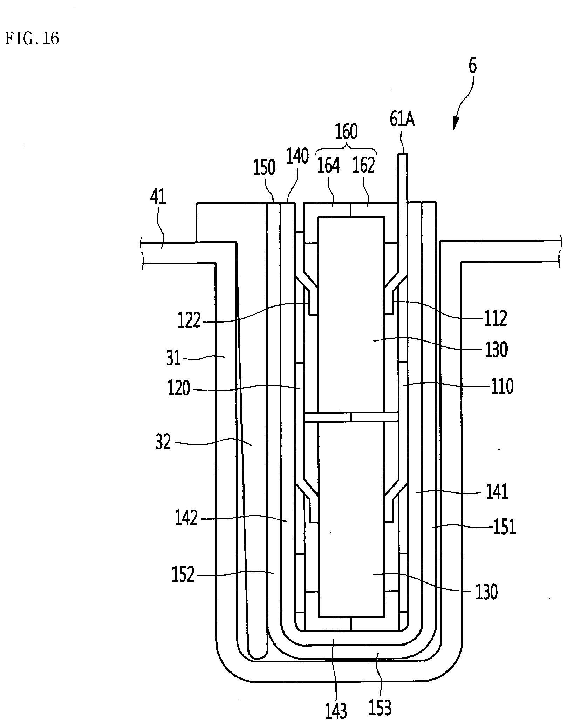

Fig. 11 is a perspective view illustrating a heating module and a wedge of a heater assembly according to an embodiment of the present disclosure. Fig. 12 is an exploded perspective view of a heating module of Fig. 11. Fig. 13 is a sectional view taken along a line I-I of Fig. 11. Fig. 14 is a sectional view taken along line J-J of Fig. 11. Fig. 15 is a sectional view taken along line K-K of Fig. 11. Fig. 16 is a sectional view in a state in which the heating module of Fig. 11 is mounted in a heat transfer pocket.

The heating module 6 illustrated in Figs. 11 to 16 may include a first terminal plate 110 from which a first terminal 61A protrudes; a second terminal plate 120 which is spaced apart from the first terminal plate 110 and from which a second terminal 61B protrudes; at least one heat emitting element 130 that is situated between the first terminal plate 110 and the second terminal plate 120 to contact the first terminal plate 110 and the second terminal plate 120; an insulating pad 140 that covers at least one of outer surfaces of the first terminal plate 110 and the second terminal plate 120; and an outer clip 150 that covers an outer surface of the insulating pad 140, presses the insulating pad 140, and has a strength that is higher than that of the insulating pad 140.

The heating module 6 may further include an insulating case 160 that has a support part 163 that supports the at least one heat emitting element 130.

Any one of the first terminal plate 110 and the second terminal plate 120 may be a positive electrode plate that contacts a positive electrode bus bar of the bus bar block 7 of Figs. 9 and 10, and the other of the first terminal plate 110 and the second terminal plate 120 may be a negative electrode plate that contacts a negative electrode bus bar of the bus bar block 7 of Figs. 9 and 10.

The terminal of any one of the first terminal plate 110 and the second terminal plate 120 may be a positive electrode terminal that contacts the positive electrode bus bar, and the terminal of the other of the first terminal plate 110 and the second terminal plate 120 may be a positive electrode terminal that contacts the negative electrode bus bar.

Hereinafter, although it will be described that the first terminal 61A of the first terminal plate 110 is a positive electrode terminal and the second terminal 61B of the second terminal plate 120 is a negative electrode terminal for convenience' sake, an opposite case may be possible.

The first terminal 61A may protrude from an upper end or a side end of the first terminal plate 110.

The second terminal 61B may protrude from an upper end or a side end of the second terminal plate 120. The second terminal 61B may protrude from the second terminal plate 120 to be spaced apart from the first terminal 61A. The second terminal 61B may be formed in parallel to the first terminal 61A.

A protrusion that protrudes towards the heat emitting element 130 to contact the heat emitting element 130 may be formed in at least one of the first terminal plate 110 and the second terminal plate 120.

When the protrusion 112 is formed in the first terminal plate 110, it may protrude from the first terminal plate 110 towards one surface of the heat emitting element 130. The protrusion 112 of the first terminal plate 110 may be formed in an area of the first terminal plate 110, which faces the heat emitting element 130. When contacting the heat emitting element 130, the protrusion 112 of the first terminal plate 110 may be resiliently deformed. One end of the protrusion 112 of the first terminal plate 110 may be connected to the first terminal plate 110, and may be formed in the first terminal plate in a bent shape. The protrusion 112 of the first terminal plate 110 may be resiliently deformed in a direction that is opposite to the heat emitting element 130 when contacting the heat emitting element 130, a contact state of the protrusion 112 of the first terminal plate 110 and the heat emitting element 130 may be maintained.

When the protrusion 122 is formed in the second terminal plate 120, a configuration of the protrusion 122 may be the same as that of the protrusion formed in the first terminal plate 110 and only the locations thereof may be different. One end of the protrusion 120 of the second terminal plate 122 may be connected to the second terminal plate 120, and may be formed in the second terminal plate 120 in a bent shape. The protrusion 122 of the second terminal plate 120 may be resiliently deformed in a direction that is opposite to the heat emitting element 130 when contacting the heat emitting element 130, a contact state of the protrusion 122 of the second terminal plate 120 and the heat emitting element 130 may be maintained.

The heat emitting element 130 may be protected by the first terminal plate 110 and the second terminal plate 120 between by the first terminal plate 110 and the second terminal plate 120. The heat emitting element 130 may include a PTC element that is heated by a current that flows through the first terminal plate 110 and the second terminal plate 120. The heat generated by the heat emitting element 130 may be transferred to the periphery thereof. The heat generated by the heat emitting element 130 may be transferred to the first terminal plate 110, the second terminal plate 120, and the insulating guide 160, and may be transferred to the outer clip 150 through the insulating pad 140.

The insulating case 160 may be an insulating housing in which the heat emitting element 130 is accommodated. The insulating case 160 may be formed of a material that is electrically insulating and thermally conductive, and may be formed of an insulating material such as silicon.

The insulating case 160 may be a combination of a plurality of members. The insulating case 160 may include a first insulating case 162 to which a portion of the first terminal plate 110 is adhered, and a second insulating case 164 to which a portion of the second terminal plate 120 is adhered.

A support part 163 that supports at least one heat emitting element 130 may be formed in the insulating case 160. The support part 163 may support the plurality of heat emitting elements 130 such that the plurality of heat emitting elements 130 is spaced apart from each other. The support part 163 may include a vertical support that extends longitudinally and supports the plurality of heat emitting elements 130 such that the plurality of heat emitting elements 130 are divided horizontally, and a horizontal support that extends transversely and supports the plurality of heat emitting elements 130 such that the plurality of heat emitting elements 130 are divided vertically.

The first insulating case 162 may be coupled to the second insulating case 164 through an insulating case coupling part 167 such as a hook, and an interior space in which the heat emitting element 130 may be formed between the first insulating case 162 and the second insulating case 164.

The insulating pad 140 may be formed of a material that is electrically insulating and thermally conductive. The insulating pad 140 may be a silicon pad or a ceramic pad. It is preferable that the insulating pad 140 be formed of a material having a high strength and an excellent heat transfer performance.

Any one of the two separated insulating pads of the insulating pad 140 may cover an outer surface of the first terminal plate 110, and the other of the two separated insulating pads may cover an outer surface of the second terminal plate 120.

One insulating pad 140 may cover both the outer surface of the first terminal plate 110 and the outer surface of the second terminal plate 120. In this case, a portion of the insulating pad 140, which covers the outer surface of the first terminal plate 110 and a portion of the insulating pad 140, which covers the outer surface of the second terminal plate 120 may be connected to each other by a connecting part, and thus the number of components of the heating module 6 may be reduced.

That is, the insulating pad 140 may include a first insulating part 141 that covers the outer surface of the first terminal plate 110, a second insulating part 142 that covers the outer surface of the second terminal plate 120, and an inner connecting part 143 that connects the first insulating part 141 and the second insulating part 142.

The insulating pad 140 may be primarily coupled to the first terminal plate 110 and the second terminal plate 120. A boss 118 and 128 may protrude from at least one of the first terminal plate 110, the second terminal plate 120, and the insulating case, and a boss insertion hole 148A and 148B, into which the boss is inserted to be stopped, may be formed in the insulating pad 140.

The boss 118 and 128 and the boss insertion hole 148A and 148B are configured to preliminarily assemble the insulating pad 140 in at least one of the first terminal plate 110, the second terminal plate 120, and the insulating case 160, and the insulating pad 140 may be pressed by the outer clip 150 while being preliminarily assembled in at least one of the first terminal plate 110 the second terminal plate 120, and the insulating case 160.

The first insulating part 141 of the insulating pad 140 may cover both a surface of the first insulating case 162, to which the first terminal plate 110 is adhered, and the outer surface of the first terminal plate 110.

The second insulating part 142 of the insulating pad 140 may cover both a surface of the second insulating case 164, to which the second terminal plate 120 is adhered, and the outer surface of the second terminal plate 120.

The inner connecting part 143 of the insulating pad 140 may surround a side of the insulating case 160, which is opposite to the first terminal 61A and the second terminal 61B.

The first terminal 61A and the second terminal 61B may protrude from the upper surface of the insulating case 160, and the inner connecting part 143 of the insulating pad 140 may cover both the lower surface of the first insulating case 162 and the lower surface of the second insulating case 164.

The insulating pad 140 may have a substantially U shape.

The outer clip 150 may constitute a whole part or a portion of an external appearance of the heating module 6. The outer clip 150 may be covered such that the insulating pad 140 is not viewed from the outside. The insulation pad 140 is not exposed to the outside due to the outer clip 150, and the damage to the insulating pad 140 may be reduced.

When the insulating pad 140 contacts the wedge 32 without using the outer clip 150, the insulating pad 140 may be torn or damaged by the wedge 32. However, when the outer clip 150 surrounds the insulating pad 140, the wedge 32 may contact the outer clip 150 without directly contacting the insulating pad 140, and damage to the insulating pad 140 due to the wedge 32 may be prevented.

It is preferable that the outer clip 150 may be a metallic clip that is formed of a metal having a strength that is higher than that of silicon. It is preferable that the outer clip 150 is a metallic clip having a high thermal conductivity, and it is more preferable that the outer clip 150 be an aluminum clip.

It is preferable that the outer clip 150 be configured such that the insulating pad 140 is pressed by the first terminal plate 110 and the second terminal plate 120 from the outside of the insulating pad 140.

It is preferable that the outer clip 150 be fixed to the first terminal plate 110, the second terminal plate 120, the insulating pad 140, and the insulating case 160 without using a coupling member such as a screw.

The outer clip 150 may be resiliently deformed in a shape that is widened to surround the insulating pad 140. If the insulating pad 140 is completely inserted into the outer clip 150, the outer clip 150 may contact the insulating pad 140 due to restoring force thereof, and the restoring force may press the insulating pad 140 to the first terminal plate 110 and the second terminal plate 120.

The outer clip 150 may include a pair of plates 151 and 152 that are spaced apart from each other, and an outer connecting part 153 that connects the pair of plates 151 and 152.

One surface 154 of the outer clip 150, which faces the outer connecting part 153, and opposite surfaces 155 and 1565 of the outer clip 150, which are perpendicular to the one surface 154 of the outer clip 150 may be opened. The outer clip 150 may be resiliently deformed by the structure in which the three surfaces 154, 155, and 156 are opened, and may press the first terminal plate 110 and the second terminal plate 120 to the insulating pad 140.

The outer clip 150 may include a first plate 151 that covers the first insulating part 141, a second plate 152 that covers the second insulating part 142, and an outer connecting part 153 that connects the first plate 141 and the second plate 142 and surrounds the inner connecting part 143.

The outer connecting part 153 may surround the inner connecting part 143 on a side that is opposite to the first terminal 61A and the second terminal 61B.

The outer clip 150 may have a shape that is the same as or similar to that of the insulating pad 140. The outer clip 150 may have a substantially U shape.

The outer clip 150 may have a surface contact part that makes surface-contact with the wedge 32. The wedge 32 may make surface-contact with at least one of the pair of plates 151 and 152 on the outside of the pair of plates 151 and 152. The outer clip 150 may have a surface contact part that makes surface-contact with one surface of the wedge 32 in any one of the pair of plates 151 and 152, and heat that is transferred to the outer clip 150 after being generated by the heat emitting element 140 may be transferred to the wedge 32.

The heating module 6 may be inserted into and fixed to the heat transfer pocket 31 together with one wedge 32, and may be inserted into and fixed to the heat transfer pocket 31 together with two wedges.

When the heating module 6 is inserted into the heat transfer pocket 31 together with one wedge 32, any one of the first and second plates 151 and 152 may make surface-contact with the wedge 32 and the other of the first and second plates 151 and 152 may make surface-contact with the heat transfer pocket 31.

When the heating module 6 is inserted into the heat transfer pocket 31 together with two wedges 32, any one of the first and second plates 151 and 152 may make surface-contact with any one of the two wedges 32 and the other of the first and second plates 151 and 152 may make surface-contact with the other of the two wedges 151 and 152.

At least a portion of the outer clip 150 may be arranged between the wedge 32 and the insulation pad 140, and the outer clip 150 may prevent damage to the insulation pad 140 due to the wedge 32. The outer clip 150 may function as an insulating pad protector that protects the insulating pad 140.

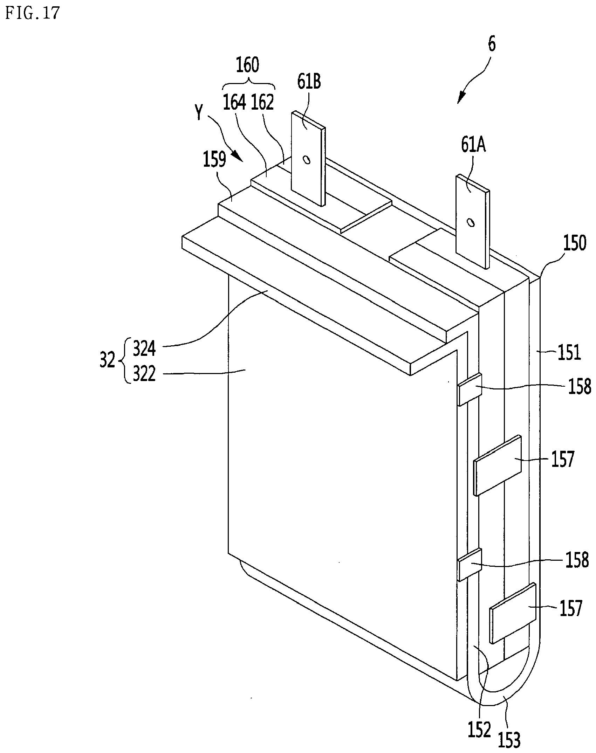

Fig. 17 is a perspective view illustrating another example of a heating module of a heater assembly according to an embodiment of the present disclosure.

The outer clip 150 may further include a side protrusion 157 that protrudes from the plate 151 and 152 to surround a portion of a side surface of the insulating case 160. The side protrusion 157 may protrude from a side end of at least one of the plates 151 and 152.

The side protrusion 157 may be formed in a direction that is perpendicular to the plates 151 and 152. One end of the side protrusion 157 may be connected to the plate 151 and 152, and an opposite end of the side protrusion 157 may be a free end.

The side protrusion 157 may restrain the assembly Y of the first and second terminal plates 110 and 120, the heat emitting element 130, the insulating pad 140, and the insulating case 160 from being extracted horizontally through the opened surfaces 155 and 156 of the outer clip 150. That is, the side protrusion 157 may be a stopper that restrains arbitrary movement of the insulating case 160.

In this case, the assembly Y of the first and second terminal plates 110 and 120, the heat emitting element 130, the insulating pad 140, and the insulating case 160 may be inserted into the outer clip 150 and extracted from the interior of the outer clip 150 only through one surface 154 of the outer clip 150, which is opposite to the connecting part 132.

The side protrusion 157 may be formed in each of the first plate 151 and the second plate 152, and the side protrusion formed in the first plate 151 may be spaced apart from the second plate 152. In contrast, the side protrusion formed in the second plate 152 may be spaced apart from the first plate 151. When a plurality of side protrusions 157 is formed in the outer clip 150, they may be spaced apart from each other vertically.

The side protrusions 157 may be formed only on any one of the left side or right side of the outer clip 150, and may be formed on the left and right sides of the outer clip 150.

When the side protrusions 157 are formed on both the left and right sides of the outer clip 150, they may restrain the assembly Y of the first and second terminal plates 110 and 120, the heat emitting element 130, the insulating pad 140, and the insulating case 160 from being horizontally extracted from the outer clip 150 because the assembly Y is stopped by the side protrusions 157.

Meanwhile, the outer clip 150 may further include a wedge holder 158 that protrudes from the plate 151 and 152 to fix the wedge 32. The wedge holder 158 may have a shape that surrounds a portion of the wedge 32. The wedge holder 158 may have a hook shape. The wedge holder 158 may restrain horizontal movement of the wedge 32.

The wedge holder 158 may be formed only on any one of the left side or right side of the outer clip 150, and may be formed on the left and right sides of the outer clip 150.

When the wedge holders 158 are formed on the left and right sides of the outer clip 150, they may restrain the wedges 32 from being horizontally slid from the outer clip 150 because the wedges 32 are stopped by the wedge holders 158.

The outer clip 150 may include a bending part 159 that is bent from the plate 151 and 152 and is seated on the wedge 32.

The wedge 32 may include a contact plate 322 that contacts the outer clip 150, and an upper plate 324 that is bent at an upper end of the contact plate 322. While at least a portion of the heat transfer pocket 31 of Figs. 9 and 10 is inserted, the wedge 32 may be pressed by a press tool (not illustrated) and may be press-fitted into the heat transfer pocket 31.

The contact plate 322 may have a wedge shape. The cross-section of the contact plate 322 may become gradually smaller as it goes to the lower side. The contact plate 322 may transfer the heat of the outer clip 150 to the heat transfer pocket 31 between the heat transfer pocket 31 and the outer clip 150.

The upper plate 324 is a part that is pressed or stricken by the press tool. If the press tool strikes or presses the upper plate 324, the upper plate 324 may deliver an external force to the contact plate 322.

When the wedge 32 is press-fitted with the heat transfer pocket 31, the upper plate 324 may be seated on and stopped by the base 41 of the heater case 3 of Figs. 9 and 10, and in this case, the wedge 32 may be restrained from being excessively inserted into the heat transfer pocket 31.

Meanwhile, the bending part 159 may be bent at an upper end of one of the first and second plates 151 and 152, and the bottom surface of the bending part 159 may be seated on the upper surface of the upper plate 324.

The heating module 6 may make surface-contact with the wedges 32, and in the heating module 6 in surface-contact with the wedge 32, the bending part 159 may be stopped by the upper surface of the upper plate 324.

The outer clip 150 may restrain the bending part 159 from being slid downwards around the wedge 32 because the bending part 159 is stopped by the upper surface 324, and may be firmly fixed to the interior of the heat transfer pocket 31 together with the wedge 32.

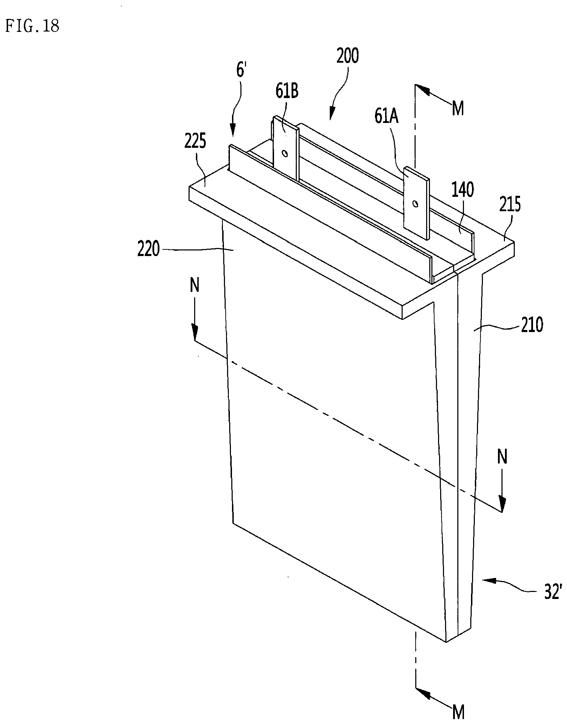

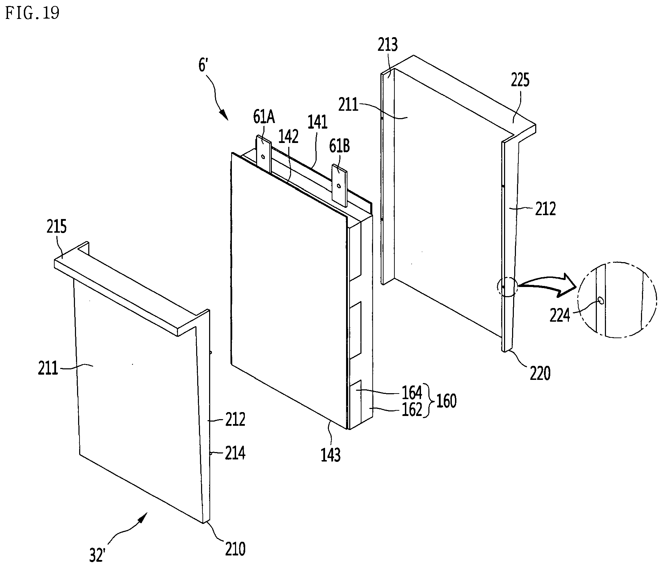

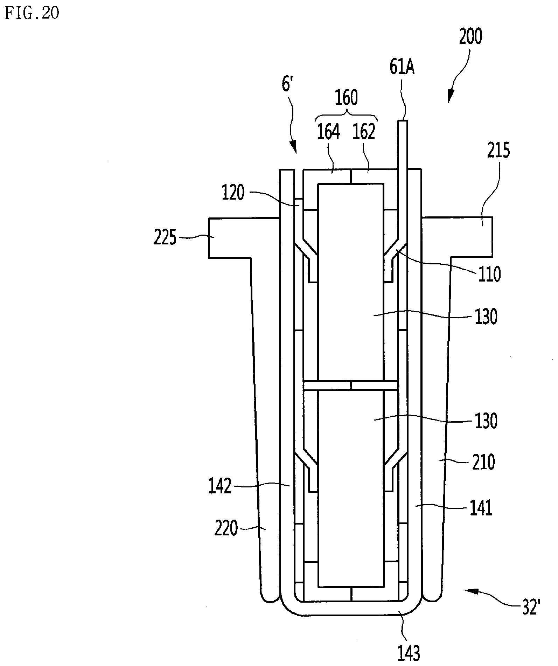

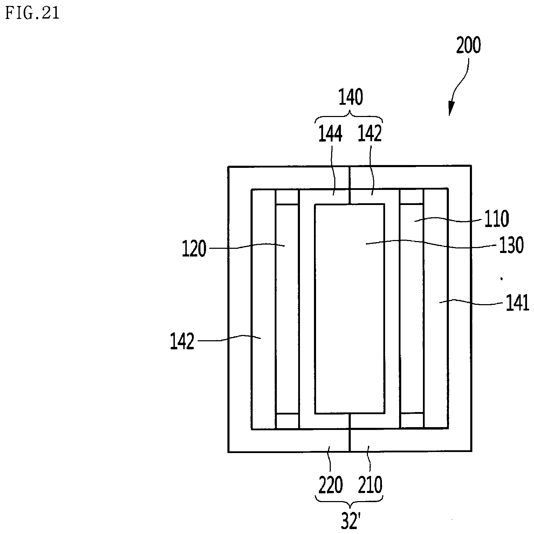

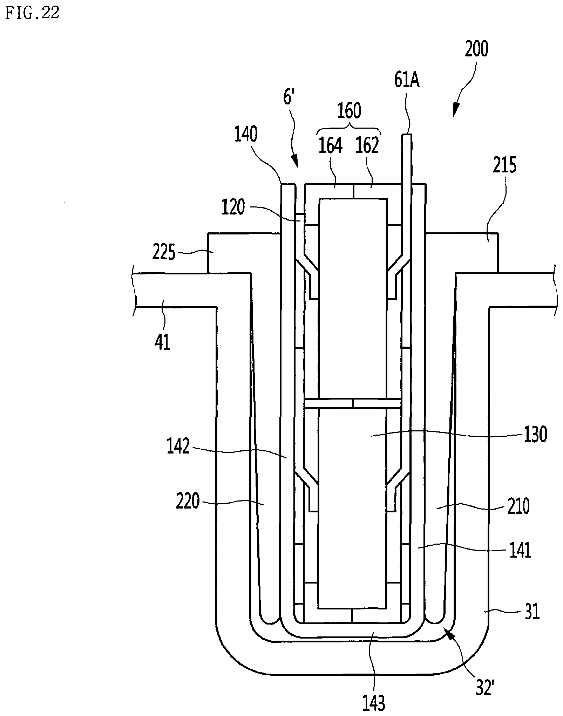

Fig. 18 is a perspective view illustrating a heating block of a heater assembly according to another embodiment of the present disclosure. Fig. 19 is an exploded perspective view of the heating block of Fig. 16. Fig. 20 is a sectional view taken along a line M-M of Fig. 18. Fig. 21 is a sectional view taken along line N-N of Fig. 18. Fig. 22 is a sectional view in a state in which the heating block of Fig. 18 is mounted in a heat transfer pocket.

The heater assembly of the present embodiment includes a heating block 200 that is inserted into and mounted on the heat transfer pocket 31, and the heating block 200 include a heating module 6', and a wedge 32' that surrounds a portion of the heating module 6'.

The heating block 200 of the present embodiment is a combination of a heating module 6' and the wedge 32', the heating module 6' may be inserted into the heat transfer pocket 31 together with the wedge 32' while being coupled to the wedge 32', and the wedge 32' may be fixed to the heat transfer pocket 31 while being coupled to the heating module 6'.

Because the configuration and operation of the present embodiment, except for the heating block 200, is the same as or similar to those of the first embodiment of the present disclosure, and the same reference numerals are used and a detailed description thereof will be omitted.

The heating module 6' may include a first terminal 61A and a second terminal 61B that protrudes to be spaced apart from each other. The first terminal 61A and the second terminal 61B may be provided together on one surface of the heating module 6'. The first terminal 61A and the second terminal 61B may be provided on an upper surface of the heating module 6' or one of the front, rear, left, and right surfaces thereof.

The heating module 6' may include a first terminal plate 110 from which a first terminal 61A protrudes; a second terminal plate 120 which is spaced apart from the first terminal plate 110 and from which a second terminal 61B protrudes; at least one heat emitting element 130 that is situated between the first terminal plate 110 and the second terminal plate 120 to contact the first terminal plate 110 and the second terminal plate 120; an insulating pad 140 that covers an outer surface of the first terminal plate 110 and an outer surface of the second terminal plate 120; and an insulating case 160 that has a support part 163 that supports the at least one heat emitting element 130.

Because the heating module 6' of the present embodiment has the same configurations of the first terminal plate 110, the second terminal plate 120, the at least one heat emitting element 130, the insulating pad 140, and the insulating case 160 as the heating module 6 of Figs. 11 to 16, the same reference numerals are used, and hereinafter, a detailed description of the first terminal plate 110, the second terminal plate 120, the at least one heat emitting element 130, the insulating pad 140, and the insulating case 160 will be omitted to avoid a repeated description thereof.

The heating module 6' of the present embodiment may exclude the outer clip 150 of Figs. 11 to 16. Of course, the heating module 6' of the present embodiment may include the outer clip 150 of Figs. 11 to 16.

The wedge 32' may surround all of the front surface, the rear surface, the left surface, and the right surface of the heating module 6'. The upper surface and the lower surface of the wedge 32' may be opened and the front surface, the rear surface, the left surface, and the right surface of the wedge 32' may be blocked, and an interior space in which the heating module 6' is accommodated may be formed in the interior of the wedge 32'.

The heating module 6' may transfer heat to the wedge 32' through a total of four surfaces of the front surface, the rear surface, the left surface, and the right surface thereof, and the wedge 32' may emit heat in four directions of the forward direction, the rearward direction, the leftward direction, and the rightward direction.

When the heating module 6' includes the outer clip 150 of Figs. 11 to 16, the wedge 32' may surround the insulating case 160 and the outer clip 150.

When the heating module 6' does not include the outer clip 150 of Figs. 11 to 16, the wedge 32' may surround the insulating case 160 and the insulating pad 140. The wedge 32' may be inserted and press-fitted into the heat transfer pocket 31 while being coupled to the heating module 6', and in this case, there is a low possibility of the insulating pad 140 being damaged by the wedge 32', and the heating module 6' may protect the insulating pad 140 with the wedge 32' without employing the outer clip 150 of Figs. 11 to 16.

The wedge 32' may be a combination of a plurality of members. The wedge 32' may include a plurality of wedge members 210 and 220 that face each other while the heating module 6' being interposed therebetween.

At least one of the plurality of wedge members 210 and 220 may include a first heat transfer plate 211 that contacts the heat transfer pad 140, and at least one second heat transfer plate 212 and 213 that extends from the first heat transfer plate 211 to cover the insulating case 160.

Each of the plurality of wedge members 210 and 220 may include a first heat transfer plate 211 and a second heat transfer plates 212 and 213, and the second heat transfer plates 212 and 213 may protrude from opposite sides of the first heat transfer plate 211. When the plurality of wedge members 210 and 220 are coupled to each other, a heating module accommodating space, of which the upper surface and the lower surface are opened and of which the front surface, the rear surface, the left surface, and the right surface are blocked, may be formed between the plurality of wedge members 210 and 220.

A boss 214 is formed in any one of the plurality of wedge members 210 and 220, and a boss insertion recess 224, into which the boss 214 is inserted, may be formed in the other of the plurality of wedge members 210 and 220.

While the heating module 6' is situated between the plurality of wedge members 210 and 220, the boss 214 may be inserted into the boss insertion recess 224, and the plurality of wedge members 210 and 220 may be fixed by the boss 214 and the boss insertion recess 224.

Each of the plurality of wedge members 210 and 220 may have a bending part 215 and 225 on which the heat case 3 is seated. The bending part 215 and 225 may be seated on the base 41 of the heater case 3. When the bending part 215 and 225 are seated on the base 41 of the heater case 3, the bending parts 215 and 225 of the plurality of wedge members 210 and 220 are constrained by the base 41 of the heater case 3 and are prevented from being excessively inserted.

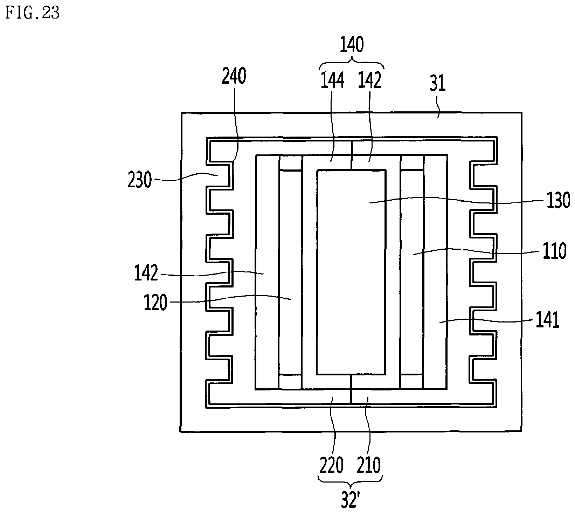

Fig. 23 is a transverse sectional view illustrating another example of a heating block of a heater assembly according to another embodiment of the present disclosure.

In the present embodiment, a protrusion 230 may be formed on any one of the inner surface of the heat transfer pocket 31 and the outer surface of the wedge 32', a groove 240 that makes surface-contact with the protrusion 230 may be formed in the other of the inner surface of the heat transfer pocket 31 and the outer surface of the wedge 32', and the protrusion 230 and the groove 240 may extend in the insertion direction of the wedge 32'.

Because the configurations and operations of the present embodiment, except for the protrusion 230 and the groove 240, are the same as those of the heating block 200 of Figs. 18 to 22, the same configurations are denoted by the same reference numerals and a detailed description thereof will be omitted.

The protrusion 230 and the groove 240 may be formed on each of the inner surface of the heat transfer pocket 31 and the outer surface of the wedge 32', and the protrusion formed on the inner surface of the heat transfer pocket 31 may be inserted into the groove formed on the outer surface of the wedge 32' and the protrusion formed on the outer surface of the wedge 32' may be inserted into the groove formed on the inner surface of the heat transfer pocket 31.

When the heating block 200 of the present embodiment is inserted into the heat transfer pocket 31, the wedge 32' and the heat transfer pocket 31 may be engaged with each other to be assembled, and the protrusion 230 and the groove 240 may increase a heat transfer area between the wedge 32' and the heat transfer pocket 31.

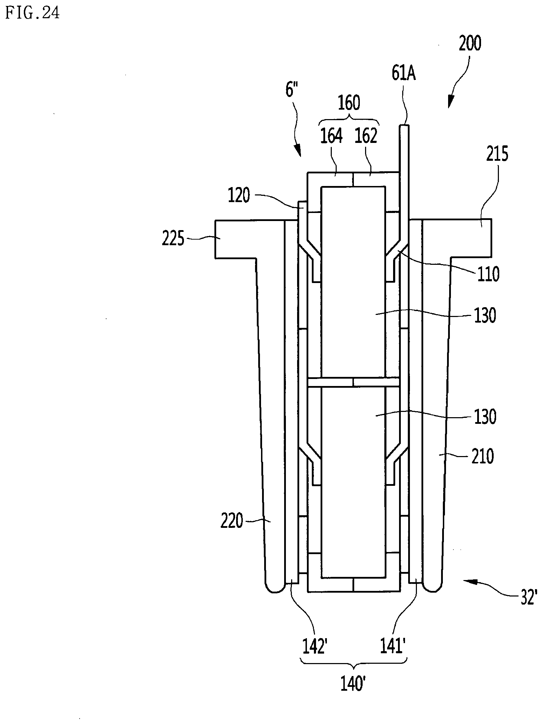

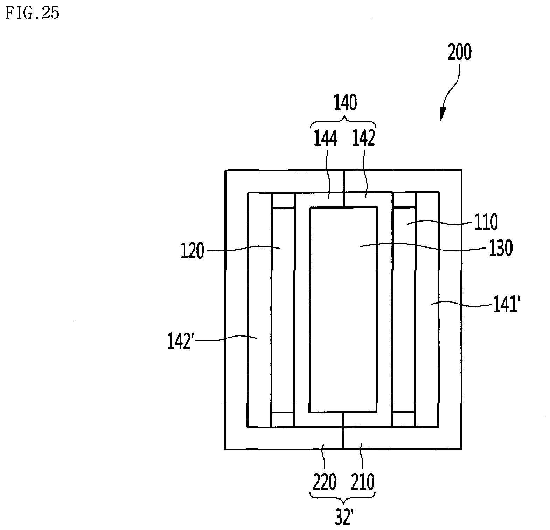

Fig. 24 is a longitudinal sectional view illustrating another example of a heating block of a heater assembly according to another embodiment of the present disclosure. Fig. 25 is a transverse sectional view e view illustrating another example of a heating block of a heater assembly according to another embodiment of the present disclosure.

In the embodiment, an insulating layer 140' that is coated on each of the wedge members 210 and 220 may be included instead of the insulating pad 140 of Figs. 18 to 22, and because the configurations and operation of the present embodiment, except for the insulating pad 140', are the same as or similar to those of the heating block 200 illustrated in Figs. 18 to 22, the same reference numerals are used and a detailed description thereof will be omitted.

The heating module 6" of the present embodiment may include a first terminal plate 110 from which a first terminal 61A protrudes; a second terminal plate 120 which is spaced apart from the first terminal plate 110 and from which a second terminal 61B protrudes; at least one heat emitting element 130 that is situated between the first terminal plate 110 and the second terminal plate 120 to contact the first terminal plate 110 and the second terminal plate 120; and an insulating case 160 that has a support part that supports the at least one heat emitting element 130, and may not include the insulating pad 140 of Figs. 18 to 22.

In the embodiment, the configurations of the first terminal plate 110, the second terminal plate 120, the at least one heat emitting element 130, and the insulating case 160, except for the insulating layer 140', are the same as or similar to those of the heating block 200 of Figs. 18 to 22, and the same reference numerals are given to the first terminal plate 110, the second terminal plate 120, the at least one heat emitting element 130, and the insulating case 160 to avoid a repeated description thereof and a detailed description thereof will be omitted.

The wedge 32' may surround the insulating case 160, the first terminal plate 110, and the second terminal plate 120.

The wedge 32' of the present embodiment may include insulating layers 140' that are formed on a surface of the wedge 32', which faces the first terminal plate 110, and a surface of the wedge 32', which faces the second terminal plate 120.

The insulating layer 140' has a configuration corresponding to the insulating pad 140 of Figs. 18 to 22, and in the present embodiment, the insulating layer 140' may be integrally formed with the wedge 32'. The insulating layer 140' may be an insulating coating layer coated on the inner surface of the wedge 32'.

Because the configurations of the wedge 32', except for the integral configuration of the insulating layer 140', are the same as or similar to the wedge 32' of Figs. 18 to 22, the same reference numerals are used and a detailed description thereof will be omitted.

In the present embodiment, a plurality of wedge members 210 and 220 that constitute the wedge 32' may surround the front, rear, left, and right surfaces of the heating modules 6", and in this case, the insulating layer 140' may include a first insulating layer 141' that is coated on any one of the plurality of wedges 210 and 220 to cover the outer surface of the first terminal plate 110, and a second insulating plate 142' that is coated on the other of the plurality of wedge members 210 and 220 to cover the outer surface of the second terminal plate 120.

According to an embodiment of the present disclosure, because the heat transferred from the heating module to the second space may be restrained from being diffused to the upper side of the second space and the bus bar may be prevented from being overheated by the heat transferred from the heating module to the second space, high reliability can be secured.

Further, because the heater case may protect all of the heating module, the bus bar block, and the PCB module, the number of components can be reduced and the assembling process can be simplified.

Further, because the thermal medium introduced into the first space of the lower tank may be prevented from being introduced into the second space in which the bus bar block is accommodated and the third space in which the PCB module is accommodated, the safety of the bus bar block and the PCB block can be secured.

Further, because the bus bar block is connected to the PCB block, the heating block and the PCB block can be electrically connected to each other while the number of components is reduced.

Further, because the connecting block is arranged between the bus bar block and the PCB block, an electrical connection between the bus bar block and the PCB block can be secured and the bus bar block and the PCB block can be easily mounted and serviced.

Further, the partition wall can prevent peripheral portions of the plurality of through holes of the heater case from being deflected and can reinforce the strength of the heater case.

Further, the heat of the heater case can be restrained from being transferred to the bus bar block.

Further, the bus bar block can be restrained from being damaged by vibration or the like.

Further, the electric wire connected to the temperature sensor can be safely maintained.

In addition, because the operator may mount the bus bar block while identifying a contact between the bus bar and the terminal, the bus bar block can be reliably mounted.

The present disclosure may be variously corrected and modified by those skilled in the art to which the present disclosure pertains without departing from the essential features of the present disclosure.

Therefore, the scope of the present disclosure is not limited by the embodiments of the present disclosure.

The scope of the present disclosure should be construed in accordance with the appended claims.

## Claims

1. A heater assembly (1) comprising:
a lower tank (2) that is provided with an inlet (21) and an outlet (22) and has a first space (S1);
a heater case (3) that covers the first space (S1), has at least one heat transfer pocket (31) that is situated in the first space (S1), and has a second space (S2);
at least one heating module (6) that is inserted into the at least one heat transfer pocket (31) such that a terminal (61) thereof is situated in the second space (S2);
a bus bar block (7) which is accommodated in the second space (S2) and to which the terminal (61) is connected; and
a PCB module (9) that controls the at least one heating module (6),
wherein the bus bar block (7) comprises:
a bus bar (71) that contacts the terminal (61); and
a first bus bar plate (74) which has a terminal through-hole (74A), through which the terminal (61) passes, and on which the bus bar (71) is arranged,
**characterized in that** the bus bar block (7) further comprises a second bus bar plate (77) that is coupled to the first bus bar plate (74), and
the bus bar (71) is fixed to at least one of the first bus bar plate (74) and the second bus bar plate (77).

2. The heater assembly (1) of claim 1, wherein the heater case (3) comprises:
a heating body (40) in which the at least one heat transfer pocket (31) and the second space (S2) are formed; and
a PCB body (50) that is integrally formed with the heating body (40) and has a third space (S3), in which the PCB module (9) is accommodated.

3. The heater assembly (1) of claim 1, wherein the PCB module (9) comprises:
a PCB (91); and
a pin block (92) that is installed on a surface of the PCB (91), which faces the bus bar block (7), and
wherein the pin block (92) comprises:
a pin (93) that is connected to the PCB (91); and
a pin receptacle (94) that surrounds the pin (93).

4. The heater assembly (1) of claim 3, wherein the pin block (92) is coupled to the bus bar block (7).

5. The heater assembly (1) of claim 3, further comprising:
a connecting block (95) that is situated between the pin block (92) and the bus bar block (7) and is coupled to the pin block (92) and the bus bar block (7).

6. The heater assembly (1) of claim 5, wherein a portion of the bus bar (71) protrudes into the connecting block (95) to be inserted into the connecting block (95), and a portion of the pin (93) protrudes into the connecting block (95) to be inserted into the connecting block (95), and
wherein the connecting block (95) comprises:
a connector (96) that is connected to the pin (93) and the bus bar (71); and
a connector receptacle (97) that surrounds the connector (96).

7. The heater assembly (1) of claim 5, wherein the heater case (3) comprises:
a heating body (40) in which the at least one heat transfer pocket (31) and the second space (S2) are formed; and
a PCB body (50) that is integrally formed with the heating body (40) and has a third space (S3), in which the PCB module (9) is accommodated, and
wherein at least one through hole (57, 58) communicates the second space (S2) and the third space (S3).

8. The heater assembly (1) of claim 7, wherein the connecting block (95) passes through the through hole (57, 58).

9. The heater assembly (1) of claim 8, wherein a plurality of connecting blocks (95) pass through a corresponding plurality of through holes (57, 58) and are connected to the pin block (92) and the bus bar block (7) to be spaced apart from each other, and the heater case (3) has a partition wall (59) that spaces the plurality of through holes apart from each other.

10. The heater assembly (1) of claim 1, wherein the first bus bar plate (74) is spaced apart from the heater case (3).

11. The heater assembly (1) of claim 1 or 10, wherein a first impact absorbing member (75) that contacts the heater case (3) is coupled to the first bus bar plate (74).

12. The heater assembly (1) of claim 1, wherein the heater case (3) comprises:
a base (41) from which the at least one heat transfer pocket (31) protrudes towards the first space (S1); and
a circumferential wall (42) that protrudes from the base (41) and has the second space therein (S2), and
wherein a first impact absorbing member (75) that contacts the base is coupled to the first bus bar plate (74).

13. The heater assembly (1) of claim 1, further comprising:
a heater cover (10) that covers the second space (S2) and hides the bus bar block (7).

14. The heater assembly (1) of claim 13, wherein a second impact absorbing member (78) that contact the heater cover (10) is coupled to the second bus bar plate (77).

15. The heater assembly (1) of claim 14, further comprising:
a temperature sensor (4) that is mounted in a sensor mounting hole (48) formed in the heater case (3) and one end of which is situated in the first space (S1),
wherein an electric wire guide (81), by which an electric wire (5) connected to the temperature sensor (4) is guided, is formed in at least one of the first bus bar plate (74) and the second bus bar plate (77).

16. The heater assembly (1) of claim 1, wherein the bus bar (71) has a terminal contact part (72) which the terminal (61) contacts, and the second bus bar plate (77) has an opening (80), through which the terminal (61) and the terminal contact part (72) are visible.

17. The heater assembly (1) of claim 1, further comprising:
a heater cover (10) that is coupled to the heater case (3) to cover the second space (S2),
wherein the second bus bar plate (77) covers an upper surface of the first bus bar plate (74).

18. The heater assembly (1) of claim 17, wherein the PCB module (9) comprises:
a PCB (91); and
a pin block (92) that is installed in the PCB (91), and
wherein a connecting block (95) that is coupled to the pin block (92) and is arranged between the bus bar block (7) and the pin block (92).

19. The heater assembly (1) of claim 18, wherein the heater case (3) comprises:
a heating body (40) in which the at least one heat transfer pocket (31) and the second space (S2) are formed; and
a PCB body (50) that is integrally formed with the heating body (40) and has a third space (S3), in which the PCB module (9) accommodated,
wherein the heating body (40) comprises:
a base (41) from which the at least one heat transfer pocket (31) protrudes towards the first space (S1); and
a circumferential wall (42) that protrudes from the base (41) and has the second space (S2) therein; and
wherein a through hole (57, 58), through which the connecting block (95) passes, is formed in the circumferential wall (42).

## Patentansprüche

1. Heizanordnung (1), mit:
einem unteren Tank (2), der mit einem Einlass (21) und einem Auslass (22) versehen ist und einen ersten Raum (S1) aufweist,
einem Heizergehäuse (3), das den ersten Raum (S1) abdeckt, zumindest eine in dem ersten Raum (S1) angeordnete Wärmeübertragungstasche (31) aufweist und einen zweiten Raum (S2) aufweist,
wenigstens einem Heizmodul (6), das in die zumindest eine Wärmeübertragungstasche (31) solchermaßen eingesetzt ist, dass ein Anschluss (61) desselben in dem zweiten Raum (S2) angeordnet ist,
einem Stromschienenblock (7), der in dem zweiten Raum (S2) aufgenommen ist und mit dem der Anschluss (61) verbunden ist, und
einem Leiterplattenmodul (9), welches das wenigstens eine Heizmodul (6) steuert,
wobei der Stromschienenblock (7) aufweist:
eine Stromschiene (71), die den Anschluss (61) kontaktiert, und
eine erste Stromschienenplatte (74), die eine Anschluss-Durchgangsöffnung (74A) aufweist, durch die der Anschluss (61) verläuft, und auf der die Stromschiene (71) angeordnet ist,
**dadurch gekennzeichnet, dass** der Stromschienenblock (7) ferner eine zweite Stromschienenplatte (77) aufweist, die mit der ersten Stromschienenplatte (74) gekoppelt ist, und
die Stromschiene (71) an der ersten Stromschienenplatte (74) und/oder der zweiten Stromschienenplatte (77) befestigt ist.

2. Heizanordnung (1) nach Anspruch 1, wobei das Heizergehäuse (3) aufweist:
einen Heizkörper (40), in dem die zumindest eine Wärmeübertragungstasche (31) und der zweite Raum (S2) ausgebildet sind, und
einen Leiterplattenkörper (50), der einstückig mit dem Heizkörper (40) ausgebildet ist und einen dritten Raum (S3) aufweist, in dem das Leiterplattenmodul (9) aufgenommen ist.

3. Heizanordnung (1) nach Anspruch 1, wobei das Leiterplattenmodul (9) aufweist:
eine Leiterplatte (91), und
einen Stiftblock (92), der auf einer Oberfläche der Leiterplatte (91) angebracht ist, die dem Stromschienenblock (7) zugewandt ist, und
wobei der Stiftblock (92) umfasst:
einen Stift (93), der mit der Leiterplatte (91) verbunden ist, und
eine den Stift (93) umgebende Stiftaufnahme (94).

4. Heizanordnung (1) nach Anspruch 3, wobei der Stiftblock (92) mit dem Stromschienenblock (7) gekoppelt ist.

5. Heizanordnung (1) nach Anspruch 3, ferner aufweisend:
einen Verbindungsblock (95), der zwischen dem Stiftblock (92) und dem Stromschienenblock (7) angeordnet ist und mit dem Stiftblock (92) und dem Stromschienenblock (7) gekoppelt ist.

6. Heizanordnung (1) nach Anspruch 5, wobei ein Teil der Stromschiene (71) in den Verbindungsblock (95) hervorsteht, um in den Verbindungsblock (95) eingesetzt zu werden, und ein Teil des Stifts (93) in den Verbindungsblock (95) vorsteht, um in den Verbindungsblock (95) eingesetzt zu werden, und
wobei der Verbindungsblock (95) aufweist:
einen Verbinder (96), der mit dem Stift (93) und der Stromschiene (71) verbunden ist, und
eine Verbinderaufnahme (97), die den Verbinder (96) umgibt.

7. Heizanordnung (1) nach Anspruch 5, wobei das Heizergehäuse (3) aufweist:
einen Heizkörper (40), in dem die zumindest eine Wärmeübertragungstasche (31) und der zweite Raum (S2) ausgebildet sind, und
einen Leiterplattenkörper (50), der einstückig mit dem Heizkörper (40) ausgebildet ist und einen dritten Raum (S3) hat, in dem das Leiterplattenmodul (9) aufgenommen ist, und
wobei zumindest eine Durchgangsöffnung (57, 58) den zweiten Raum (S2) und den dritten Raum (S3) miteinander verbindet.

8. Heizanordnung (1) nach Anspruch 7, wobei der Verbindungsblock (95) durch die Durchgangsöffnung (57, 58) verläuft.

9. Heizanordnung (1) nach Anspruch 8, wobei mehrere Verbindungsblöcke (95) durch entsprechend mehrere Durchgangsöffnungen (57, 58) verlaufen und mit dem Stiftblock (92) und dem Stromschienenblock (7) unter gegenseitigem Abstand voneinander verbunden sind, und das Heizergehäuse (3) eine Trennwand (59) aufweist, die die mehreren Durchgangsöffnungen voneinander beabstandet.

10. Heizanordnung (1) nach Anspruch 1, wobei die erste Stromschienenplatte (74) von dem Heizergehäuse (3) beabstandet ist.

11. Heizanordnung (1) nach Anspruch 1 oder 10, wobei ein erstes stoßabsorbierendes Bauteil (75), welches das Heizergehäuse (3) berührt, mit der ersten Stromschienenplatte (74) gekoppelt ist.

12. Heizanordnung (1) nach Anspruch 1, wobei das Heizergehäuse (3) aufweist:
eine Basis (41), von der die zumindest eine Wärmeübertragungstasche (31) in Richtung des ersten Raums (S1) vorsteht, und
eine Umfangswand (42), die von der Basis (41) vorsteht und in sich den zweiten Raum (S2) hat, und
wobei ein erstes stoßabsorbierendes Bauteil (75), welches die Basis berührt, mit der ersten Stromschienenplatte (74) gekoppelt ist.

13. Heizanordnung (1) nach Anspruch 1, ferner aufweisend:
eine Heizerabdeckung (10), die den zweiten Raum (S2) abdeckt und den Stromschienenblock (7) verbirgt.

14. Heizanordnung (1) nach Anspruch 13, wobei ein zweites stoßabsorbierendes Bauteil (78), welches die Heizerabdeckung (10) berührt, mit der zweiten Stromschienenplatte (77) gekoppelt ist.

15. Heizanordnung (1) nach Anspruch 14, ferner aufweisend:
einen Temperatursensor (4), der in einer in dem Heizergehäuse (3) ausgebildeten Sensoranbringungsöffnung (48) angebracht ist und dessen eines Ende sich in dem ersten Raum (S1) befindet,
wobei eine elektrische Leitungsführung (81), mittels der eine mit dem Temperatursensor (4) verbundene elektrische Leitung (5) geführt ist, in der ersten Stromschienenplatte (74) und/oder der zweiten Stromschienenplatte (77) ausgebildet ist.

16. Heizanordnung (1) nach Anspruch 1, wobei die Stromschiene (71) ein Anschlusskontaktteil (72) hat, welches der Anschluss (61) kontaktiert, und die zweite Stromschienenplatte (77) eine Öffnung (80) hat, durch die der Anschluss (61) und das Anschlusskontaktteil (72) sichtbar sind.

17. Heizanordnung (1) nach Anspruch 1, ferner aufweisend:
eine Heizerabdeckung (10), die mit dem Heizergehäuse (3) gekoppelt ist, um den zweiten Raum (S2) abzudecken,
wobei die zweite Stromschienenplatte (77) eine Oberseite der ersten Stromschienenplatte (74) bedeckt.

18. Heizanordnung (1) nach Anspruch 17, wobei das Leiterplattenmodul (9) aufweist:
eine Leiterplatte (91), und
einen Stiftblock (92), der in der Leiterplatte (91) installiert ist, und
wobei ein Verbindungsblock (95) vorhanden ist, der mit dem Stiftblock (92) gekoppelt ist und zwischen dem Stromschienenblock (7) und dem Stiftblock (92) angeordnet ist.

19. Heizanordnung (1) nach Anspruch 18, wobei das Heizergehäuse (3) aufweist:
einen Heizkörper (40), in dem die zumindest eine Wärmeübertragungstasche (31) und der zweite Raum (S2) ausgebildet sind, und
einen Leiterplattenkörper (50), der einstückig mit dem Heizkörper (40) ausgebildet ist und einen dritten Raum (S3) hat, in dem das Leiterplattenmodul (9) aufgenommen ist,
wobei der Heizkörper (40) aufweist:
eine Basis (41), von der die zumindest eine Wärmeübertragungstasche (31) in Richtung des ersten Raums (S1) vorsteht, und
eine Umfangswand (42), die von der Basis (41) vorsteht und den zweiten Raum (S2) in sich aufweist, und
wobei eine Durchgangsöffnung (57, 58), durch die der Verbindungsblock (95) verläuft, in der Umfangswandung (42) ausgebildet ist.

## Revendications

1. Système de chauffage (1) comprenant:
un réservoir inférieur (2) qui est pourvu d'une entrée (21) et d'une sortie (22) et qui présente un premier espace (S1);
un boîtier (3) de dispositif de chauffage qui recouvre le premier espace (S1), a au moins une poche de transfert de chaleur (31) qui est située dans le premier espace (S1), et présente un deuxième espace (S2);
au moins un module de chauffage (6) qui est inséré dans ladite poche de transfert de chaleur (31) de manière à ce que sa borne (61) soit située dans le second espace (S2);
un bloc de barre omnibus (7) qui est logé dans le deuxième espace (S2) et auquel est connectée la borne (61); et
un module de carte de circuit imprimé (9) qui commande ledit module de chauffage (6),
le bloc de barre omnibus (7) comprenant:
une barre omnibus (71) qui entre en contact avec la borne (61); et
une première plaque de barre omnibus (74) qui présente un trou traversant de borne (74A),
que traverse la borne (61), et dans lequel est disposée la barre omnibus (71), **caractérisé en ce que** le bloc de barre omnibus (7) comprend en outre une seconde plaque de barre omnibus (77) qui est couplée à la première plaque de barre omnibus (74), et
la barre omnibus (71) est fixée à au moins la première plaque de barre omnibus (74) et/ou à la seconde plaque de barre omnibus (77).

2. Système de chauffage (1) selon la revendication 1, le boîtier (3) de dispositif de chauffage comprenant:
un corps de chauffe (40) dans lequel sont formés ladite poche de transfert de chaleur (31) et le deuxième espace (S2); et
un corps de carte de circuit imprimé (50) qui est formé d'un seul tenant avec le corps de chauffe (40) et présente un troisième espace (S3) dans lequel est logé le module de carte de circuit imprimé (9).

3. Système de chauffage (1) selon la revendication 1, le module de carte de circuit imprimé (9) comprenant:
Une carte de circuit imprimé (91); et
Un bloc de broche (92) qui est installé sur une surface de la carte de circuit imprimé (91) qui fait face au bloc de barre omnibus (7), et
le bloc de broche (92) comprenant:
une broche (93) qui est connectée à la carte de circuit imprimé (91); et
un logement de broche (94) qui entoure la broche (93).

4. Système de chauffage (1) selon la revendication 3, le bloc de broche (92) étant couplé au bloc de barre omnibus (7).

5. Système de chauffage (1) selon la revendication 3, comprenant en outre:
un bloc de connexion (95) qui est situé entre le bloc de broche (92) et le bloc de barre omnibus (7) et est couplé au bloc de broche (92) et au bloc de barre omnibus (7).

6. Système de chauffage (1) selon la revendication 5, une partie de la barre omnibus (71) faisant saillie dans le bloc de connexion (95) de manière à s'insérer dans le bloc de connexion (95), et une partie de la broche (93) faisant saillie dans le bloc de connexion (95) de manière à s'insérer dans le bloc de connexion (95), et
le bloc de connexion (95) comprenant:
un connecteur (96) qui est connecté à la broche (93) et à la barre omnibus (71);
et
un logement de connecteur (97) qui entoure le connecteur (96).

7. Système de chauffage (1) selon la revendication 5, le boîtier de chauffage (3) comprenant:
un corps de chauffage (40) dans lequel sont formés ladite poche de transfert de chaleur (31) et le deuxième espace (S2); et
un corps de carte de circuit imprimé (50) qui est formé d'un seul tenant avec le corps de chauffe (40) et présente un troisième espace (S3) dans lequel le module de carte de circuit imprimé (9) est logé et
au moins un trou traversant (57, 58) communicant avec le deuxième espace (S2) et le troisième espace (S3).

8. Système de chauffage (1) selon la revendication 7, le bloc de connexion (95) traversant le trou traversant (57, 58).

9. Système de chauffage (1) selon la revendication 8, une pluralité de blocs de connexion (95) passant à travers un trou traversant correspondant de la pluralité de trous traversants (57, 58) et étant connectés au bloc de broche (92) et au bloc de barre omnibus (7) de manière à ce qu'ils soient espacés l'un de l'autre, et le boîtier de chauffage (3) ayant une paroi de séparation (59) qui sépare la pluralité des trous traversants les uns des autres.

10. Système de chauffage (1) selon la revendication 1, la première plaque de barre omnibus (74) étant espacée du boîtier (3) de dispositif de chauffage.

11. Système de chauffage (1) selon la revendication 1 ou 10, un premier élément d'absorption de choc (75) qui entre en contact avec le boîtier (3) de dispositif de chauffage (3) étant couplé à la première plaque de barre omnibus (74).

12. Système de chauffage (1) selon la revendication 1, le boîtier de chauffage (3) comprenant:
une base (41) à partir de laquelle ladite poche de transfert de chaleur (31) fait saillie en direction du premier espace (S1); et
une paroi circonférentielle (42) qui fait saillie de la base (41) et qui présente le deuxième espace (S2) en son sein, et
un premier élément d'absorption de choc (75) qui entre en contact avec la base, étant couplé à la première plaque de barre omnibus (74).

13. Système de chauffage (1) selon la revendication 1, comprenant en outre:
un couvercle (10) de dispositif de chauffage qui recouvre le deuxième espace (S2) et cache le bloc de barre omnibus (7).

14. Système de chauffage (1) selon la revendication 13, un second élément d'absorption de choc (78) qui entre en contact le couvercle (10) de dispositif de chauffage étant couplé à la seconde plaque de barre omnibus (77).

15. Système de chauffage (1) selon la revendication 14, comprenant en outre:
une sonde de température (4) qui est montée sur un trou de montage de capteur (48) formé dans le boîtier (3) de dispositif de chauffage et dont une extrémité est située dans le premier espace (S1),
un guide (81) de fil électrique qui guide un fil électrique (5) connecté à la sonde de température (4), est formé dans au moins la première plaque de barre omnibus (74) et/ou la seconde plaque de barre omnibus (77).

16. Système de chauffage (1) selon la revendication 1, la barre omnibus (71) ayant une partie de contact de borne (72) avec laquelle la borne (61) entre en contact, et la seconde plaque de barre omnibus (77) ayant une ouverture (80), à travers laquelle la borne (61) et la partie de contact de borne (72) sont visibles.

17. Système de chauffage (1) selon la revendication 1, comprenant en outre:
un couvercle (10) de dispositif de chauffage qui est couplé au boîtier (3) de dispositif de chauffage pour couvrir le deuxième espace (S2),
la seconde plaque de barre omnibus (77) recouvrant une surface supérieure de la première plaque de barre omnibus (74).

18. Système de chauffage (1) selon la revendication 17, le module de carte de circuit imprimé (9) comprenant:
une carte de circuit imprimé (91); et
un bloc de broche (92) qui est installé dans la carte de carte de circuit imprimé (91), et
un bloc de connexion (95) qui est couplé au bloc de broche (92) et est disposé entre le bloc de barre omnibus (7) et le bloc de broche (92).

19. Système de chauffage (1) selon la revendication 18, le boîtier (3) de dispositif de chauffage comprenant:
un corps de chauffe (40) dans lequel ladite poche de transfert de chaleur (31) et le deuxième espace (S2) sont formé; et
un corps de carte de circuit imprimé (50) qui est formé d'un seul tenant avec le corps de chauffe (40) et présente un troisième espace (S3) dans lequel est logé le module de carte de circuit imprimé (9),
le corps de chauffe (40) comprenant:
une base (41) à partir de laquelle ladite poche de transfert de chaleur (31) fait saillie en direction du premier espace (S1); et
une paroi circonférentielle (42) qui fait saillie de la base (41) et qui présente le deuxième espace (S2) en son sein; et
un trou traversant (57, 58) que traverse le bloc de connexion (95), étant formé dans la paroi circonférentielle (42).
